# EUROPÄISCHE PATENTSCHRIFT

(11) **EP 2 995 929 B1**
(45) Veröffentlichungstag und Bekanntmachung des Hinweises auf die Patenterteilung: **08.03.2017**
(21) Anmeldenummer: 15002364.6
(22) Anmeldetag: 07.08.2015
(51) Int. Cl.: G01N 17/00, F16L 59/00, F25D 11/00, G01M 99/00

(54) **KLIMA-PRÜFKAMMER**
CLIMATE TEST CHAMBER
CHAMBRE DE TEST CLIMATISÉE

(30) Priorität: 12.08.2014 DE 202014006563 U
(43) Veröffentlichungstag der Anmeldung: 16.03.2016
(73) Patentinhaber: Narr Isoliersysteme GmbH, 72336 Balingen (DE)
(72) Erfinder: Uwe, Narr, 72336 Balingen (DE)
(74) Vertreter: Binner, Bernhard

(56) Entgegenhaltungen:
- EP-A1- 0 071 090
- DE-A1- 19 745 826
- Das Qualitätsprogramm ET AL: "Kühl-und Tiefkühlzellen Immer die perfekte Lösung", , 29. November 2013 (2013-11-29), XP055249679, Gefunden im Internet: URL:http://www.sbs-kt.de/fileadmin/user_up load/user_pdf/broschueren/SBS_BroschKuT_D. pdf [gefunden am 2016-02-12]
- "Temperature and Climate Chambers", , 18. August 2010 (2010-08-18), XP055249752, Gefunden im Internet: URL:http://www.sbs-kt.de/fileadmin/user_up load/user_pdf_en/brochures/SBS_TuK_2010_06 _EN_Ansicht.pdf [gefunden am 2016-02-12]

## Beschreibung

Die Erfindung betrifft eine Klima-Prüfkammer mit einer Decke, einem Boden und mehreren Wänden, welche jeweils mehrschichtig aufgebaut sind und jeweils einen thermisch isolierenden Kern aufweisen, welcher mittels Blechtafeln außen- und innenseitig flächig abgedeckt ist.

Klima-Prüfkammern der gattungsgemäßen Art sind schon seit langem bekannt. Diese dienen als klimatisierter Raum, insbesondere zu Testzwecken von Kraftfahrzeugen. So können diese Klima-Prüfkammern sowohl auf sehr niedrige als auch auf sehr hohe Temperaturen temperiert werden, um beispielsweise eine Fahrzeugelektronik oder das Anspringverhalten eines Kraftfahrzeugmotors zu testen. Zu diesem Zweck sind solche Klima-Prüfkammern mit einer Decke, einem Boden und mehreren Wänden versehen, welche jeweils mehrschichtig aufgebaut sind. Dabei weisen die Decke, der Boden und die Wände jeweils einen thermisch isolierenden Kern auf, so dass die im Innenraum anliegenden Temperaturen nicht nach außen in den Umgebungsbereich übertragen werden. Somit lässt sich aufgrund dieses thermisch isolierenden Kerns innerhalb der Klima-Prüfkammer die jeweils gewünschte Temperatur und auch Feuchtigkeitszustände und dergleichen mehr simulieren, wie diese normalerweise bei extremen Betriebsbedingungen, beispielsweise von Kraftfahrzeugen, vorkommen können.

Für eine ausreichende Stabilität der Klima-Prüfkammer sind die Decke, der Boden und die Wände mittels Blechtafeln außenseitig und innenseitig flächig abgedeckt. Mit "außenseitig" sind die Seiten der fertigen Klima-Prüfkammer der Decke und der Wände gemeint, welche nach außen zum Umgebungsbereich hin weisen. Mit "innenseitig" ist die Innenfläche der Decke, des Bodens und der Wände gemeint, welche im geschlossenen Zustand den Innenraum der fertigen Klima-Prüfkammer begrenzen.

Bei den bisher bekannten Klima-Prüfkammern sind die, den jeweiligen Kern abdeckenden Blechtafeln mehrteilig ausgebildet und in ihren Verbindungsbereichen insbesondere innenseitig gasdicht miteinander verschweißt. Dabei sind besondere Konstruktionen dieser "Stoßbereiche" bekannt, bei welchen der der benachbarten Blechtafel zugewandte Kantenbereich einer Blechtafel zunächst in Richtung des thermisch isolierenden Kerns "in die Wand hinein, nach innen" abgebogen ausgebildet ist. An diesen "Verbindungsabschnitt" schließt sich ein nach außen abgebogener, streifenförmig ausgebildeter Blechstreifen der Blechtafel an, welcher im Wesentlichen quer, das heißt rechtwinklig zur Ebene der Blechtafel bzw. der Decke, des Bodens oder der Wand verläuft. Dabei berühren sich zwei solcher benachbarten Blechstreifen zweier benachbarter Blechtafeln flächig aufeinander und bilden eine gemeinsame, von der Innenseite des Wandelementes zugängliche Stoßkante.

Nachdem zwei benachbarte Blechtafeln auf diese Art und Weise aneinandergefügt sind, werden diese im Bereich dieser Stoßkante miteinander verschweißt. Dabei ist besonders zu beachten, dass nach dem Verschweißen dieser Stoßkanten diese nicht über die Innenfläche der jeweils zugeordneten Wand hinausstehen, um hier Verletzungsgefahren zu vermeiden.

Des Weiteren sind die Blechtafeln in der Regel vertikal ausgerichtet und weisen eine maximale Breite von etwa einem Meter auf. Dies wiederum führt dazu, dass mehrere solcher "Schweißstöße" hergestellt werden müssen, was insbesondere zu einer großen Schweißlänge und somit zu relativ hohen Herstellkosten führt. Auch die Decke und der Boden sind nach innen hin mit solchen Blechtafeln abgedeckt, wobei eine derart spezielle Ausgestaltung der Schweißverbindungen mit den zweifach abgebogenen Kanten der Blechtafeln nicht erforderlich ist, da diese Bereiche keine Gefährdung für das Personal darstellen. Jedoch sind die Decke, der Boden und die Wände wiederum untereinander miteinander verschweißt, was durch entsprechend angebogene oder separate Winkelbleche an den inneren Blechtafeln im vertikal oberen und vertikal unteren Endbereich der Wände sowie deren Eckbereiche erfolgen kann.

Insgesamt wird durch die innenseitige Verschweißung der Blechtafeln eine absolut gasdichte "Kammerkonstruktion" erreicht, wodurch insbesondere Wärmebrücken oder auch sonstige Durchlässe sicher vermieden werden.

Die oben beschriebenen Konstruktionen sind einerseits vom Biegeaufwand der Blechtafeln und andererseits auch im Zusammenhang mit der Montage der einzelnen Blechtafeln äußerst aufwändig.

Demgemäß liegt der Erfindung die Aufgabe zugrunde, eine Klima-Prüfkammer der gattungsgemäßen Art derart auszugestalten, dass insbesondere ein einfacher und sicherer sowie dichter Aufbau bei der Montage ermöglicht wird.

Die Aufgabe wird erfindungsgemäß zusammen mit den Merkmalend des Oberbegriffes des Anspruches 1 dadurch gelöst, dass die Decke aus mehreren miteinander über Spannverschlüsse feststehend verspannten Deckenelementen, der Boden aus mehreren miteinander über Spannverschlüsse feststehend verspannten Bodenelementen und die Wände aus mehreren miteinander über Spannverschlüsse feststehend verspannten Wandelementen bestehen und, dass die Wandelemente mit ihren Blechtafeln in deren Stoßbereichen zusätzlich miteinander verschweißt sind und die Blechtafeln zur Bildung der innenseitigen Schweißnähte in den thermisch isolierenden Kern hineinragend abgebogen ausgebildet sind und jeweils quer zur Ebene der Blechtafeln verlaufende, nach innen gerichtete Anlagestege bilden, dass der Verbindungsbereich zwischen der Blechtafel und dem jeweiligen Anlagesteg derart bogenförmig oder geradlinig schräg verlaufend ausgebildet ist, dass zwischen zwei aneinander stoßenden Blechtafeln eine Vertiefung gebildet wird, dass die jeweiligen Schweißnähte in diesen Vertiefungen zwischen den Blechtafeln vorgesehen sind und, dass die Schweißnähte nach deren Fertigstellung nicht über die Oberfläche der Blechtafeln hinaus stehen.

Durch die erfindungsgemäße Ausgestaltung wird eine Klima-Prüfkammer zur Verfügung gestellt, deren einzelne Bauteile insbesondere äußerst einfach und sicher sowie formstabil zu montieren sind. Hierzu ist insbesondere vorgesehen, dass die Decke, der Boden wie auch die Seitenwände aus mehreren Einzelelementen bestehen, welche gemäß des Anspruches als Deckenelemente, Bodenelemente oder Wandelemente bezeichnet sind. Diese Einzelelemente werden vor dem eigentlichen Schweißvorgang zunächst feststehend über Spannverschlüsse miteinander verspannt. Dabei können diese Spannverschlüsse auch zwischen der Decke und den Wänden sowie den Wänden und dem Boden vorgesehen sein. Nach vollständigem Verspannen der Einzelelemente der Decke, des Bodens und der Wände, wird somit eine in sich schon stabile "Vorkonstruktion" der Klima-Prüfkammer erreicht. Durch anschließendes Verschweißen sämtlicher Einzelelemente miteinander, wird sodann die absolut gasdichte Ausbildung der Klima-Prüfkammer erreicht.

Des Weiteren ist besonders vorteilhaft die Ausgestaltung, dass bei den Stoßverbindungen der Wandelemente innenseitig eine spezielle "Blechkontur" angeformt ist, welche eine äußerst einfache Ausbildung der Schweißverbindung sowie ein äußert einfaches Herstellen der Kantenbereiche der Wandelemente zulässt.

So sind die Blechtafeln zur Bildung der innenseitigen Schweißnähte in den thermisch isolierenden Kern hineinragend abgebogen ausgebildet und bilden jeweils quer zur Ebene der Blechtafeln verlaufende, nach innen gerichtete Anlagestege. Diese Ausbildung der einander zugewandten Kantenbereiche der einzelnen Blechtafeln der einzelnen einander benachbarten Wandelemente, ermöglicht eine äußerst einfache Herstellung durch einfaches Biegen "in dieselbe" Richtung in Richtung des thermisch isolierenden Kerns.

Des Weiteren ist auch die in diesen Stoßbereichen vorzusehende Schweißverbindung, in diesen inneren Stoßbereichen der benachbarten Wandelemente in äußerst einfacher Weise herstellbar. Auch die Forderung, dass diese Schweißnähte nicht über die Innenfläche des jeweiligen Wandelementes in den Innenraum der Klima-Prüfkammer hineinragen wird in einfacher Weise dadurch erreicht, dass die bogenförmig oder schräg verlaufenden Verbindungsabschnitte zwischen der eigentlichen Blechtafel und den aneinander liegenden Anlagestegen der Blechtafel bogenförmig oder geradlinig schräg verlaufend ausgebildet sind, so dass eine im Wesentlichen V-förmig ausgebildete Nut zwischen den Blechtafeln mit ausreichender Tiefe gebildet wird. Somit ist erkennbar, dass aufgrund der erfindungsgemäßen Ausgestaltung, insbesondere der Wandelemente aber auch der Bodenelemente und der Deckenelemente mit ihren Spannverschlüssen, ein äußerst einfacher und kostengünstiger Aufbau der Klima-Prüfkammer erreicht wird.

Weitere vorteilhafte Ausgestaltungen der Erfindung sind den weiteren Unteransprüchen entnehmbar.

So kann gemäß Anspruch 2 vorgesehen sein, dass die Wandelemente Kupplungsprofile aufweisen, mit welchen die Wandelemente in Einsteckprofile der Bodenelemente und mit Einsteckprofilen der Deckenelemente formschlüssig, passend in Eingriff bringbar sind.

Weiter kann gemäß Anspruch 3 vorgesehen sein, dass die Bodenelemente in ihren einander zugewandten Stirnflächen Formschlussprofile aufweisen, über welche die Bodenelemente formschlüssig, passend miteinander in Eingriff bringbar sind.

Gemäß Anspruch 4 kann des Weiteren vorgesehen sein, dass die Wandelemente im Bereich in ihren einander zugewandten Stirnflächen Formschlussprofile aufweisen, über welche die Wandelemente formschlüssig, passend miteinander in Eingriff bringbar sind.

Durch die Ausgestaltungen gemäß der Ansprüche 2 bis 4 wird schon nach dem Zusammenfügen der Bodenelemente, der Deckenelement und der Wandelemente eine äußerst hohe Eigenstabilität erreicht, so dass das anschließende (nacheinander) Verspannen dieser Bauteile durch die Spannverschlüsse in äußerst einfacher und sicherer Weise durchführbar ist. Die Formschlussprofile können dabei als "Nut- Federsystem", als abwechselnd ineinander greifende Erhöhungen und Vertiefungen in den einander zugewandten Stirnfläche dieser benachbarten Elemente oder in jeder anderen geeigneten Art von Formschlussverbindungen ausgebildet sein.

Zur Erhöhung der Tragkraft und/oder zur Verbesserung der Verschleißeigenschaften kann gemäß Anspruch 5 vorgesehen sein, dass die Bodenelemente oberseitig mit zusätzlichen Bodenblechen versehen sind. Diese Bodenbelche können dabei eine rutschsichere Oberfläche bilden und nach deren Montage miteinander verschweißt sein. Diese Bodenbleche können in Ihrer Grundfläche identisch wie das "darunter" befindliche Bodenelement ausgebildet sein. Auch ist denkbar diese Bodenbleche abwechselnd von Bodenelement zu Bodenelement im Stoßbereich einerseits überstehende zum benachbarten Bodenelement und andererseits zurückstehend auszubilden, so dass sich der jeweilige Stoß der Bodenbleche nicht direkt im Bereich des Stoßes der jeweils benachbarten, zugehörigen Bodenelemente befindet.

Weiter kann gemäß Anspruch 6 vorgesehen sein, dass die Bodenelemente unterhalb ihrer Bodenbleche oder unterhalb ihrer oberseitigen Blechtafeln mit einer Verstärkungsplatte versehen sind. Durch diese Ausgestaltung wird insbesondere die Tragkraft des gesamten Bodens erheblich erhöht, so dass beispielsweise auch Fahrzeuge größeren Gewichts in die Klima-Prüfkammer eingefahren werden können, ohne eine Beschädigung hervorzurufen. Hierzu sei angemerkt, dass die Bodenelemente sowohl mit den zusätzlichen Bodenplatten ausgestattet sein könne, welche dann auf der eigentlichen inneren bzw. oberen Blechtafel des jeweiligen Bodenelements angeordnet sind und mit diesen beispielweise auch verschraubt sein können.

Weiter kann gemäß Anspruch 7 vorgesehen sein, dass die Wandelemente über Winkelbleche feststehend mit den Deckenelementen einerseits und mit den Bodenelementen andererseits in Verbindung stehen und, dass die Winkelbleche mit den jeweils benachbarten Wandelementen, den benachbarten Deckenelementen und den benachbarten Bodenelementen dicht verschweißt sind.

Weitere vorteilhafte Ausgestaltungen der Erfindung sind den weiteren Unteransprüchen 8 bis 12 entnehmbar.

Hierzu sei insbesondere auf die wannenartige Ausgestaltung der "oberen" Bodenbleche bzw. Verstärkungsbleche der Bodenelemente und deren geschweißte Anbindung an die Seitenwände hingewiesen. Diese Ausgestaltung hat insbesondere den Vorteil, dass die gesamt benötigte Schweißnahtlänge erheblich kürzer ist, wodurch die Herstellkosten deutlich verringert werden. Auch werden keine besonderen separat anzufertigenden Einlegebleche oder dgl. in diesen Verbindungsbereichen benötigt, wie dies beim bekannten Stand der Technik erforderlich ist.

Des Weiteren treffen auf Grund dieser speziellen Ausgestaltung im Stoßbereich zwischen den Wänden einerseits und der Decke bzw. dem Boden andererseits immer "nur" zwei Bleche aufeinander, was zu einer höheren Festigkeit führt. Auch sind die Innenecken im Bereich zweier rechtwinklig aufeinander stoßender Wände und dem Boden in einfacher Weise verschweißbar, ohne dass hierzu zusätzliche Maßnahmen beispielweise durch zusätzliche Einlegebleche oder dgl. notwendig wären.

Eine weitere vorteilhafte Ausgestaltung ergibt sich aus der Merkmalskombination des Anspruches 13. Danach ist vorgesehen, dass die Wandelemente in den Eckbereichen der Klimaprüfkammer als Eckelemente ausgebildet sind, welche jeweils zum benachbarten Wandelementen einen vorstehenden Wandteil bilden. Durch diese Ausgestaltung werden die inneren, die benachbarten Wandelemente verbindenden Schweißnähte in die "Wandfläche" verlegt. D.h. es sind direkt in den "Innenecken" der rechtwinklig aufeinanderstoßenden Wände kein Schweißnähte vorgesehen. Damit werden bei einem Temperaturwechsel, wie dieser naturgemäß bei Klima-Prüfkammern vorkommt, eine Beschädigung der in der "Fläche" angeordneten Schweißnähte sicher vermieden, da durch diese Schweißnahtanordnung kein Reißen oder ein Lösen der Schweißnähte auftreten kann, was bei direkt in den Eckstößen angeordneten Schweißnähten der Fall sein könnte.

Anhand der Zeichnung werden nachfolgend beispielhaft einige mögliche Ausführungsbeispiele der erfindungsgemäßen Klima-Prüfkammer näher beschrieben. Es zeigt:
- Fig. 1: eine schematische, perspektivische Darstellung einer möglichen Ausführungsform einer erfindungsgemäßen Klima-Prüfkammer;
- Fig. 2: eine perspektivische Explosionsdarstellung der den Boden bildenden Bodenelemente der KlimaPrüfkammer aus Fig. 1;
- Fig. 3: eine vergrößerten Ausschnitt III des linken Bodenelementes aus Fig. 2, woraus insbesondere die Teile der eingesetzten Spannverschlüsse sowie die spezielle Profilierung der Stirnfläche des Bodenelementes erkennbar sind;
- Fig. 4: eine perspektivische Explosionsdarstellung von vier Wandelementen, welche in Form von Eckelementen ausgebildet sind;
- Fig. 5: eine perspektivische Explosionsdarstellung zweier sich über die komplette Höhe der KlimaPrüfkammer aus Fig. 1 erstreckenden Wandelemente, welche als Aussteifungselemente ausgestaltet sind;
- Fig. 6: ein quer verlaufendes, oberes Wandelement in perspektivischer Darstellung der "seitlich, rechten" Wand der Klima-Prüfkammer aus Fig. 1;
- Fig. 7: ein unteres Wandelement der "seitlich, rechten" Wand der Klima-Prüfkammer aus Fig. 1, welches zusammen mit dem Wandelement aus Fig. 6 einen Teil der "seitlich, rechten" Wand der KlimaPrüfkammer aus Fig. 1 bildet;
- Fig. 8: einen in Fig. 1 nicht sichtbaren Teil der Rückwand in Form eines "mittleren" Wandelementes, welches einen zur Aufnahme eines Fensters dienenden Durchbruch aufweist;
- Fig. 9: ein oberes Wandelement sowie ein unteres Wandelement in perspektivischer Explosionsdarstellung der aus Fig. 1 nicht sichtbaren hinteren Wand, welche zusammen mit dem Wandelement aus Fig. 8 die vollständige, rückwärtige Wand der Klima-Prüfkammer aus Fig. 1 bilden.
- Fig. 10: eine teilweise Schnittdarstellung der vorderen Wand im Bereich ihrer beiden vorderen Wandelemente einerseits mit dem aufgesetzten Deckenelement sowie dem unterseitig angeordneten Bodenelement aus Fig. 2;
- Fig. 11: eine vergrößerte Darstellung der Schweißverbindung der beiden Wandelemente der vorderen Wand aus Fig. 10;
- Fig. 12: eine teilweise Schnittdarstellung der vorderen Wand im Bereich ihrer beiden vorderen Wandelemente einerseits mit dem aufgesetzten Deckenelement sowie dem unterseitig angeordneten Bodenelement aus Fig. 2 mit einer zweiten Ausführungsvariante der Decken- und Bodenanbindung an die Wandelemente;
- Fig. 13: eine vergrößerte Schnittdarstellung der Deckanbindung an das Wandelement aus Fig. 12;
- Fig. 14: eine vergrößerte Schnittdarstellung der Bodenanbindung an das Wandelement aus Fig. 12.

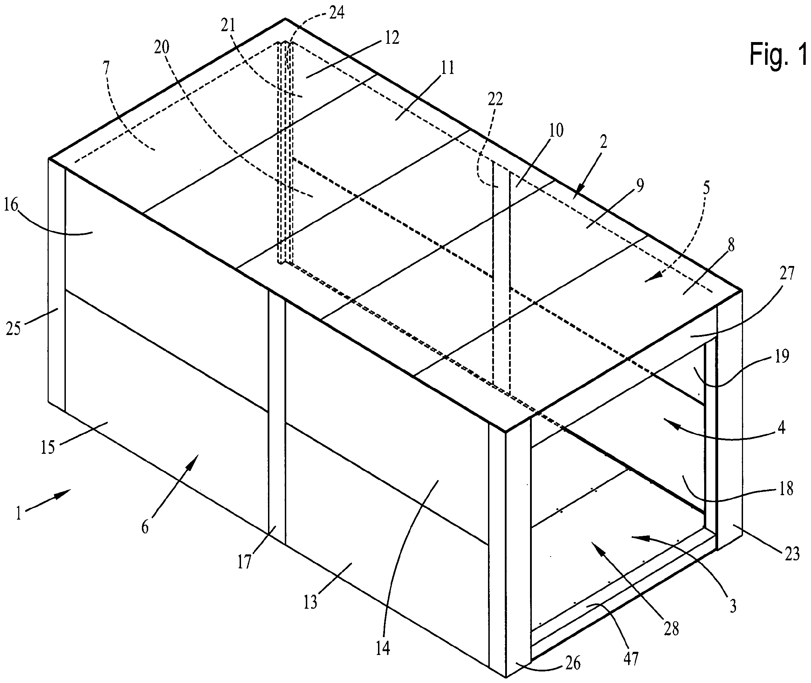

Fig. 1 zeigt beispielhaft eine perspektivische Darstellung einer Klima-Prüfkammer 1, welche eine Decke 2, einen Boden 3 sowie insgesamt vier Wände 4, 5, 6, und 7 aufweist. Von diesen vier Wänden 4, 5, 6 und 7 ist die "hintere" Seitenwand 7 lediglich in gestrichelten Linien angedeutet.

Weiter ist aus Fig. 1 ersichtlich, dass die Decke 2 bei der dargestellten Ausführungsvariante aus insgesamt fünf Deckenelementen 8, 9, 10, 11 und 12 besteht. Die in Fig. 1 nach seitlich vorne gerichtete Wand 6 besteht bei der dargestellten Ausführungsvariante aus zwei paarweise übereinander angeordneten Wandelementen 13, 14 und 15, 16. Diese paarweise übereinander angeordneten Wandelemente 13, 14 und 15, 16 sind über ein weiteres Wandelement 17 miteinander verbunden, wobei sich dieses Wandelement 17 über die komplette Höhe der Klima-Prüfkammer 1 erstreckt. In gleicher Weise wie diese seitlich vordere Wand 6, ist auch die seitlich hintere Wand 5 ausgebildet und weist ebenfalls paarweise übereinander angeordnete Wandelemente 18, 19 bzw. 20 und 21 auf. Auch diese paarweise übereinander angeordneten Wandelemente 18, 19 und 20, 21 sind über ein sich vertikal erstreckendes Wandelement 22 miteinander verbunden.

Des Weiteren sind vier weitere Wandelemente 23, 24, 25 und 26 vorgesehen, welche bei der dargestellten Ausführungsvariante der Klima-Prüfkammer 1 als Eckelemente ausgebildet sind. Die vordere Wand 4 wird dabei von einem Teil dieser Eckelemente 23 und 26 gebildet, welche in ihrem oberen Endbereich über ein quer verlaufendes Wandelement 27 miteinander verbunden sind, wobei dieses Wandelement 27 als eine Art Sturz ausgebildet ist. Somit bildet die vordere Wand 4 eine Zufahrtsöffnung 28, welche zum Ein- und Ausfahren beispielsweise eines Kraftfahrzeuges vorgesehen sein kann. Diese Zufahrtsöffnung 28 ist im normalen Betriebszustand mittels eines Tores verschließbar, welches als "Rolltor", "Segmenttor" ausgebildet oder auch aus, um eine vertikale Achse schwenkbare Flügeltüren gebildet sein kann (in der Zeichnung nicht dargestellt).

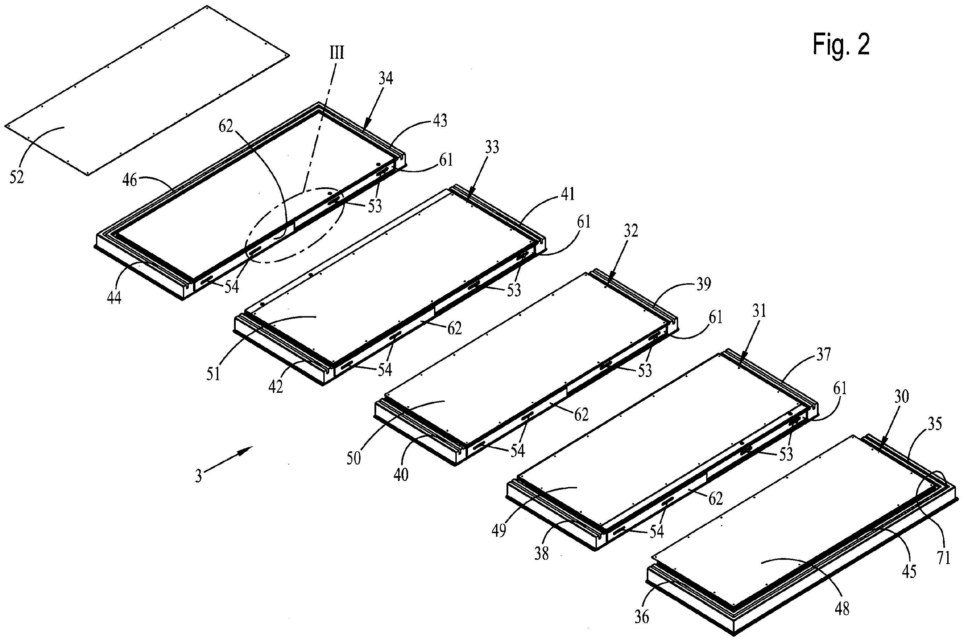

Fig. 2 zeigt eine perspektivische Explosionsdarstellung der einzelnen Bodenelemente 30, 31, 32, 33 und 34 des Bodens 3 aus Fig. 1. Wie aus Fig. 2 ersichtlich ist, bilden diese Bodenelemente 30 bis 34 zur seitlich vorderen Wand 6 und zur seitlich hinteren Seitenwand 5 aus Fig. 1 hin, oberseitig in ihren Randbereichen jeweils Einsteckprofile 35, 36, 37, 38, 39, 40, 41, 42, 43, 44, in welche einerseits die Wandelemente 13, 15 und 17 und andererseits die Wandelemente 18, 20 und 22 passen mit einem entsprechenden "Gegenprofil" einsteckbar sind. Im Bereich dieser Einsteckprofile 35 bis 44 sind Spannverschlüsse vorgesehen, welche jedoch in Fig. 2 der Übersichtlichkeit halber nicht dargestellt sind. Das vordere Bodenelement 30 und das hintere Bodenelement 34 bilden zwischen ihren Einsteckprofilen 35, 36 bzw. 43, 44 quer verlaufende, nach oben offene Einsteckprofile 45 bzw. 46. Das Einsteckprofil 46 der "hinteren" Bodenplatte 34 dient dabei zum "Aufstellen" bzw. Einsetzen der hinteren Wand 7 aus Fig. 1. Im fertigen Betriebszustand wird das vordere Einsteckprofil 45 von einer Schwellenleiste 47 (Fig. 1) abgedeckt, welche über ein entsprechendes "Gegenprofil" in dieses Einsteckprofil 45 einsteckbar ist. Auch im Bereich dieser Einsteckprofile 45 und 46 sind in der Zeichnung nicht dargestellte Spannverschlüsse vorgesehen, so dass die hintere Wand 7 mit dem Bodenelement 43 und die Schwellenleiste 47 aus Fig. 1 mit dem vorderen Bodenelement 30 feststehend verspannbar sind.

Des Weiteren ist aus Fig. 2 erkennbar, dass alle Bodenelemente 30 bis 34 oberseitig mit einem zusätzlichen Bodenblech 48 bis 52 abgedeckt sind, welche mit den zugehörigen Bodenelementen 30 bis 34 verschraubt sein können. Dabei könne die Bodenelemente 30 bis 34 mit einer "oberen" Blechtafel versehen sein, auf welche das jeweils zugehörige Bodenblech aufgeschraubt ist. Dabei können die Grundflächen der Bodenbleche 48 bis 52 unterschiedlich ausgebildet sein, so dass hier eine Überlappung in den Stoßbereichen der Bodenelemente 30 bis 34 erfolgen kann. Dies ist insbesondere für das vordere Bodenblech 48 des Bodenelementes 30 erkennbar, welches zum Bodenelement 31 hin über die Stoßkante des Bodenelementes 30 hinaussteht. Zur Verdeutlichung, dass die Bodenplatten 48 bis 52 auf die zugehörigen Bodenelemente 30 bis 34 aufgesetzt sind, ist das hintere Bodenblech 52 in Fig. 2 als abgehobenes, separates Bauteil dargestellt.

Die Bodenelemente 30 bis 34 sind über entsprechende Spannverschlüsse feststehend miteinander verspannbar, wobei die Spannverschlüsse aus einem Hakenelement 53 und einem Aufnahmeelement 54 bestehen. Dabei greifen die Hakenelemente 53, beispielsweise des Bodenelementes 31, in entsprechend im Bodenelement 30 stirnseitig angeordnete Aufnahmeelemente 54 ein, welche allerdings in Fig. 2 nicht erkennbar sind. Dementsprechend sind auch den aus Fig. 2 erkennbaren Aufnahmeelementen 54 entsprechende Hakenelemente 53 zugeordnet, welche jeweils gegenüberliegend in der Stirnseite des benachbarten Bodenelementes 30, 31, 32 bzw. 33 angeordnet sind.

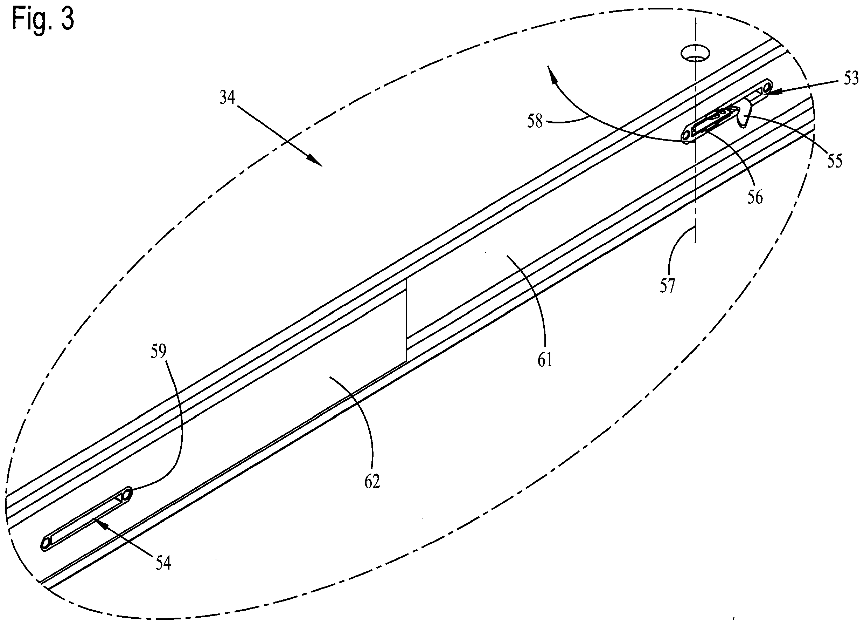

Bezüglich dieser Spannverschlüsse zeigt Fig. 3 einen vergrößerten Ausschnitt III des hinteren Bodenelementes 34 aus Fig. 2. Es ist erkennbar, dass das Hakenelement 53 einen Spannhaken 55 aufweist, welcher in einem entsprechenden Gehäuse 56 versenkt stirnseitig im Bodenelement 34 angeordnet ist. Dieser Spannhaken 55 ist um eine Stellachse 57 aus der in Fig. 3 dargestellten neutralen Position in Richtung des Pfeiles 58 drehbar und kann somit mit einem Zapfen eines zugeordneten Aufnahmeelementes des benachbarten Bodenelementes 33 aus Fig. 2 in Zugverbindung gebracht werden. Das entsprechend zu diesem Hakenelement 53 zugehörige Aufnahmeelement 54 ist in Fig. 3 ebenfalls erkennbar. Dieses Aufnahmeelement 54 bildet ein Aufnahmegehäuse 59, in welchem ein entsprechender Spannzapfen angeordnet ist (in der Zeichnung nicht sichtbar).

Weiter ist aus Fig. 3 erkennbar, dass die Stirnseite 60 des Bodenelementes 34 im Bereich des Hakenelementes 53 eine Vertiefung 61 und im Bereich des Aufnahmeelementes 54 eine Erhöhung 62 aufweist, welche mit entsprechenden Gegenprofilen des benachbarten Bodenelementes 33 aus Fig. 2 formschlüssig in Eingriff bringbar sind. Mit solchen Vertiefungen 61 bzw. Erhöhungen 62 sind auch die weiteren Bodenelemente versehen, wie dies für die Bodenelemente 31, 32 und 33 aus Fig. 2 ersichtlich ist.

Somit können die Bodenelemente 30 bis 34 in einfacher Weise präzise mit ihren Stirnseiten formschlüssig in Kontakt gebracht und sodann mittels der Spannverschlüsse 53, 54 feststehend miteinander verspannt werden, so dass sich ein einheitlicher Boden 3 ergibt, auf welchen die Wände 4, 5, 6 und 7 mit entsprechenden Gegenprofilen auf die Einsteckprofile 35 bis 45 aufstellbar sind. Auch die Wandelemente 13 bis 21 sowie die als Eckelemente ausgebildeten Wandelemente 22 bis 26, sind mit solchen Spannverschlüssen 53, 54 versehen, so dass auch diese Einzelelemente in einfacher Weise feststehend miteinander verspannbar sind.

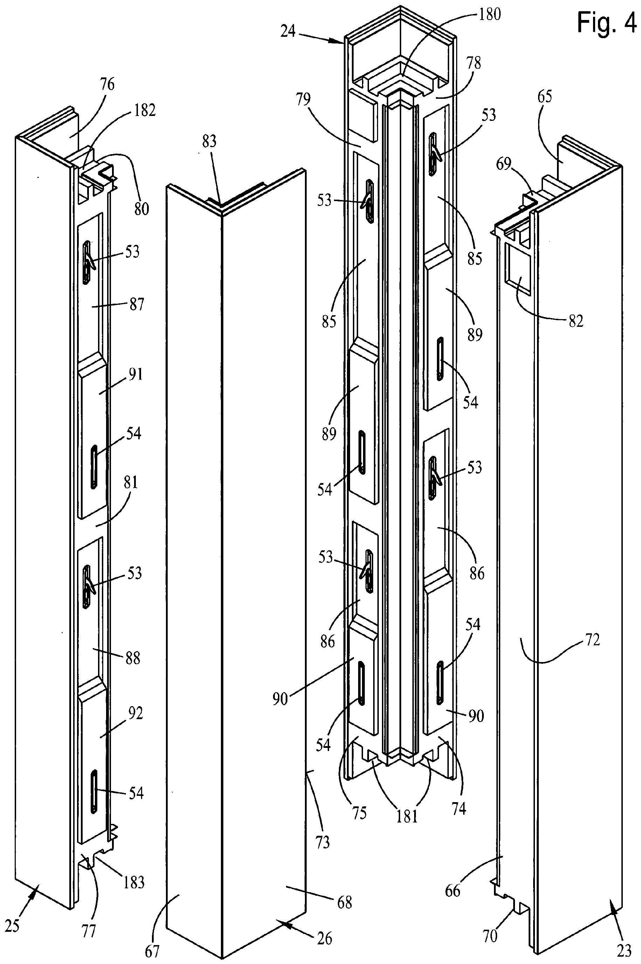

Bezüglich der als Eckelemente ausgebildeten Wandelemente 23 bis 26 zeigt Fig. 4 eine perspektivische Explosionsdarstellung.

Wie aus Fig. 4 ersichtlich ist, sind die beiden Eckelemente 23 und 26, welche im vorderen Endbereich der Klima-Prüfkammer 1 aus Fig. 1 angeordnet sind, mit unterschiedlichen Schenkellängen ihrer rechtwinklig zueinander verlaufenden Wandteile 65, 66 bzw. 67, 68 versehen. Weiter ist aus Fig. 4 insbesondere für das Eckelement 23 erkennbar, dass dieses im oberen Endbereich und im unteren Endbereich jeweils ein Kupplungsprofil 69 bzw. 70 aufweist. Mit dem unteren Kupplungsprofil 70 ist das Eckelement 23 in den Eckbereich 71 (Fig. 2) der beiden Einsteckprofile 35 und 45 des Bodenelementes 30 passend einsetzbar. In entsprechender Art und Weise kann die obere Deckenplatte 8 (Fig. 1) mit einem entsprechenden Gegenprofil auf das Kupplungsprofil 69 des Eckelementes 23 aufgesetzt werden. Somit ergibt sich zwischen der Bodenplatte 30 und dem Eckelement 23 sowie dem Deckenelement 8 und dem Eckelement 23 eine formschlüssige, feststehende Verbindung nach dem Zusammenbau.

Die unterschiedliche Schenkellänge der beiden Eckelemente 23 und 26 ist darin begründet, dass die einander zugewandten Stirnflächen 72 des Eckelementes 23 und 73 des Eckelementes 26 gleichzeitig die Begrenzung der Zufahrtsöffnung 28 der Klima-Prüfkammer 1 aus Fig. 1 bilden. Dementsprechend sind diese beiden Stirnflächen 72 und 73 auch eben ausgebildet, wie dies für die Stirnfläche 72 des Eckelementes 23 in Fig. 4 erkennbar ist.

Da die beiden "hinteren" Eckelemente 24 und 25 als Eckverbindung für die paarweise übereinander angeordneten Wandelemente 20 und 21 sowie 15 und 16 zur rückwärtigen Wand 7 ausgebildet sind, sind diese mit rechtwinklig zueinander verlaufenden Wandteilen 74, 75 bzw. 76, 77 gleicher "Länge" ausgestattet. Im Bereich der Stirnflächen 78, 79 bzw. 80, 81 weisen die Wandelemente 74, 75 bzw. 76, 77 abwechselnd übereinander verteilt angeordnete Hakenelemente 53 und Aufnahmeelemente 54 auf, über welche die Eckelemente 24 und 25 mit den Wandelementen 15, 16 bzw. 20, 21 sowie der rückseitigen Wand 7 feststehend verspannbar sind.

Weiter ist aus Fig. 4 erkennbar, dass im oberen Endbereich der Stirnfläche 72 des Eckelementes 23 eine rechteckförmige Einsenkung 82 vorgesehen ist, mit welcher ein entsprechendes "Gegenstück" des oberen Wandelementes 27 der vorderen Wand 4 formschlüssig in Eingriff bringbar ist (in der Zeichnung nicht dargestellt).

Weiter ist aus Fig. 4 noch andeutungsweise das obere Kupplungsprofil 83 des linken vorderen Eckelementes 26 erkennbar, wobei ein ebenfalls vorhandenes untere Kupplungsprofil, wie zum Eckelement 23 beschrieben, in Fig. 4 nicht erkennbar ist. Solche oberen und unteren Kupplungsprofile 180, 181 bzw. 182, 183 sind auch für die Eckelemente 24 und 25 vorgesehen, wie aus der Zeichnungen erkennbar ist. Auch die beiden Eckelemente 23 und 24 sind im Bereich ihrer kürzeren Wandteile 65 und 67 bzw. auf deren Stirnfläche mit entsprechenden Hakenelementen 53 und Aufnahmeelementen 54 versehen, so dass auch diese beiden Eckelemente 23 und 26 passend mit den Wandelementen 13, 14 der Wand 6 und den Wandelementen 18, 19 der Wand 5 feststehend verspannbar sind. Auch ist für die beiden Eckelemente 24 und 25 aus Fig. 4 erkennbar, dass im Bereich der Hakenelemente 53 die Stirnflächen 75 und 77 mit rechteckförmigen Einsenkungen 85, 86 bzw. 87, 88 versehen sind. Desgleichen gilt auch für die Hakenelemente 53 im Bereich der Stirnfläche 74. Dementsprechend sind hier auch dieselben Bezugszeichen 85 und 86 eingetragen.

Im Bereich der Aufnahmeelemente 54 bilden die Stirnflächen 74, 75 und 77 entsprechende rechteckförmige Erhöhungen 89, 90 bzw. 91, 92. In gleicher Art und Weise ist auch die Stirnfläche des Wandteiles 76 ausgebildet (in der Zeichnung nicht sichtbar). Aufgrund dieser Einsenkungen 85 bis 88 und der Erhöhungen 89 bis 92 sind die Eckelemente 24 und 25 mit entsprechenden Gegenprofilen der paarweise zugeordneten Wandelemente 15, 16 bzw. 20, 21 sowie mit der rückwärtigen Wand 7 formschlüssig in Eingriff bringbar. Damit lassen sich die Eckelemente 24, 25 im Bezug auf die Wände 5, 6 und 7 wie auch die Eckelemente 23 und 26 im Bezug auf die Wände 4, 5 und 6, in einfacher Weise durch "Zusammenstecken" präzise positionieren.

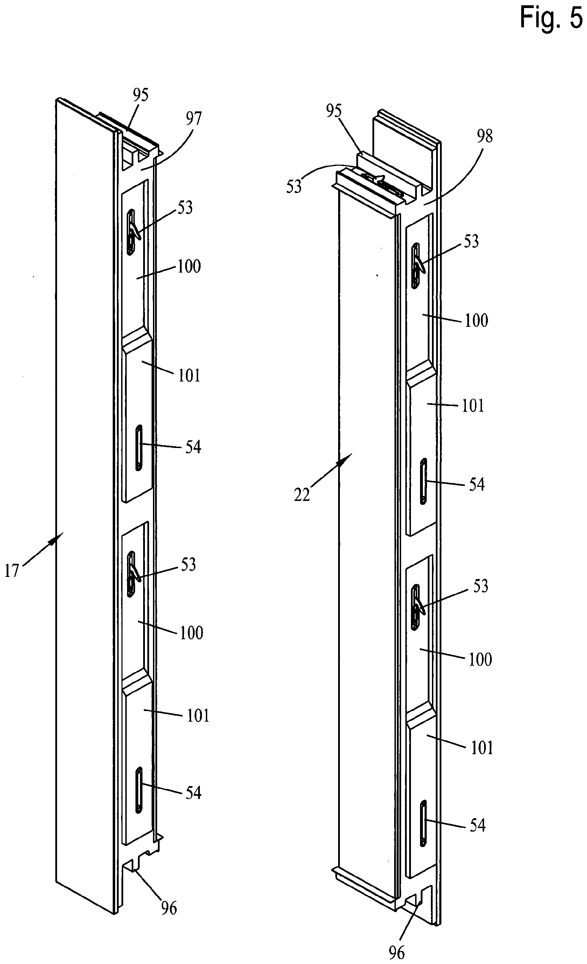

Fig. 5 zeigt weiter eine perspektivische Explosionsdarstellung der mittleren Wandelemente 17 und 22 aus Fig. 1. Aus Fig. 5 ist dabei ersichtlich, dass die beiden Wandelemente 17 und 22 oberseitig und unterseitig jeweils ein Kupplungsprofil 95 bzw. 96 aufweisen, mit welchem die beiden Wandelemente 17 und 22 formschlüssig mit einem entsprechenden Gegenprofil einerseits des mittleren Deckenelemente 10 und andererseits des mittleren Bodenelemente 32 in Eingriff bringbar sind. Bei der dargestellten Ausführungsvariante können somit die unteren Kupplungsprofile 96 der beiden Wandelemente 17 und 22 formschlüssig mit den Einsteckprofilen 39 und 40 des mittleren Bodenelementes 32 in Eingriff gebracht werden. Für das obere Kupplungsprofil 95 des Wandelementes 22 ist noch ein Hakenelement 53 erkennbar, welches mit einem entsprechenden Aufnahmeelement im Bereich des mittleren Deckenelementes 10 in Zugverbindung bringbar ist (in der Zeichnung nicht erkennbar).

Des Weiteren weisen auch die beiden Wandelemente 17 und 22 im Bereich ihrer "Stoßflächen" 97 bzw. 98 Hakenelemente 53, Aufnahmeelemente 54 sowie entsprechend zugeordnete Vertiefungen 100 bzw. Erhöhungen 101 auf, so dass diese Wandelemente 17 und 22 formschlüssig mit den aus Fig. 1 erkennbaren, benachbarten Wandelementen 13, 14, 15, 16 bzw. 18, 19 und 20, 21 in Eingriff gebracht werden können. Durch anschließendes Verspannen dieser Bauteile untereinander, wird somit eine äußerst stabile Seitenwand 5 bzw. 6 erreicht.

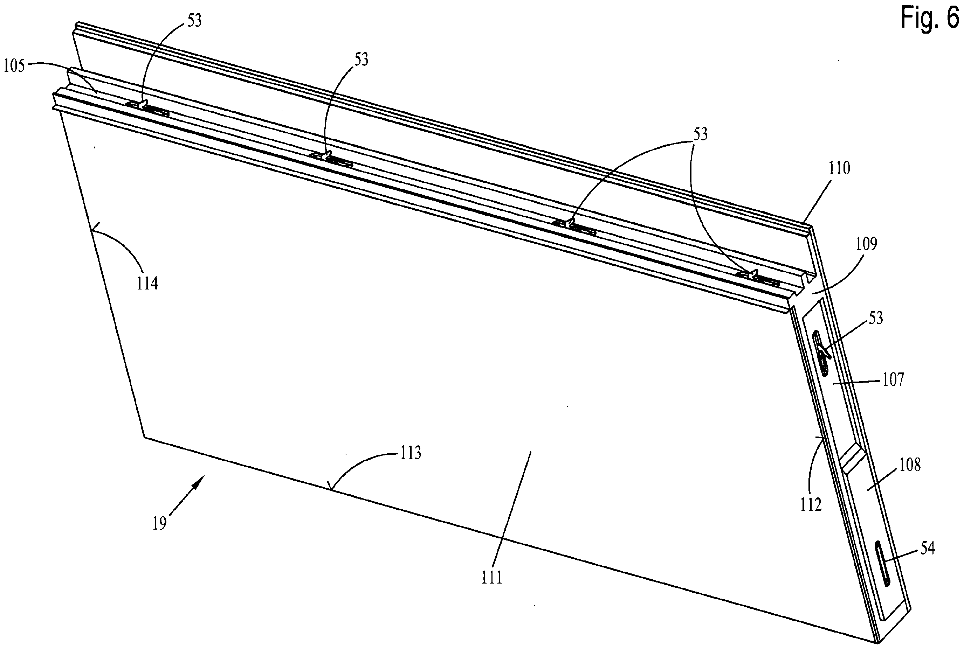

Zu diesen Seitenwänden 5 und 6 bzw. den zugehörigen Wandelementen 13, 14 bzw. 15, 16 bzw. 18, 19 bzw. 20, 21, zeigt Fig. 6 beispielhaft eine perspektivische Darstellung des oberen Wandelementes 19 der Wand 5. Hierbei sei angemerkt, dass sämtliche oberen Wandelemente 14, 16, 19 und 21 identisch ausgebildet sind, so dass die nachfolgende Beschreibung zum Wandelement 19 auch auf die anderen Wandelemente 14, 16 und 21 zu lesen ist.

Wie aus Fig. 6 ersichtlich ist, weist das Wandelement 19 im oberen Endbereich ein Kupplungsprofil 105 auf, auf welches die Deckenelemente 8, 9 sowie 10 mit einem entsprechenden Gegenprofil (in der Zeichnung der Fig. 1 nicht erkennbar) passend aufsetzbar sind. Im Bereich dieses Kupplungsprofiles 105 sind hier ebenfalls Hakenelemente 53 vorgesehen, welche im montierten Zustand in entsprechende Aufnahmeelemente in den Randbereichen der Gegenprofile der Deckenelemente 8, 9 und 10 aus Fig. 1 eingreifen (in der Zeichnung nicht dargestellt),

Die vordere Stirnfläche 106 des Wandelementes 19 weist in ihrer oberen Hälfte ebenfalls ein Hakenelement 53 und in ihrer unteren Hälfte ein Aufnahmeelement 54 auf. Auch hier ist zur Profilierung im Bereich des Hakenelementes 53 eine Einsenkung 107 bzw. im Bereich des Aufnahmeelementes 54 eine Erhöhung 108 vorgesehen. Mit diesem Profil, bestehend aus der Einsenkung 107 und der Erhöhung 108, ist das Wandelement 19 mit einem entsprechenden Gegenprofil des Wandteiles 65 des Eckelementes 23 aus Fig. 4 in Eingriff bringbar. In entsprechender Höhe sind im Bereich dieses Wandteiles 65 auch ein entsprechendes Aufnahmeelement 54 bzw. Hakenelement 53 vorgesehen (in Fig. 4 nicht sichtbar), so dass das Wandelement 19 mit dem Eckelement 23 feststehend verspannbar ist.

Des Weiteren ist aus Fig. 6 zumindest andeutungsweise erkennbar, dass das Wandelement 19 mehrschichtig aufgebaut ist und im Bereich des Hakenelementes 53 bzw. des Aufnahmeelementes 54 einen zentralen, thermisch isolierenden Kern 109 bildet. Dieser Kern 109 ist "außenseitig" mittels einer Blechtafel 110 flächig abgedeckt. Ebenso ist die "Innenseite" dieses Kerns 109 mittels einer zweiten Blechtafel 111 ebenfalls flächig abgedeckt. Die Kantenbereiche der "äußeren" Blechtafel 110 sind dabei rechtwinklig "in den Kern 109" abgebogen ausgebildet. Die inneren Kanten 112, 113 der Blechtafel 111 weisen eine spezielle Formgebung auf, wie später noch näher erläutert wird.

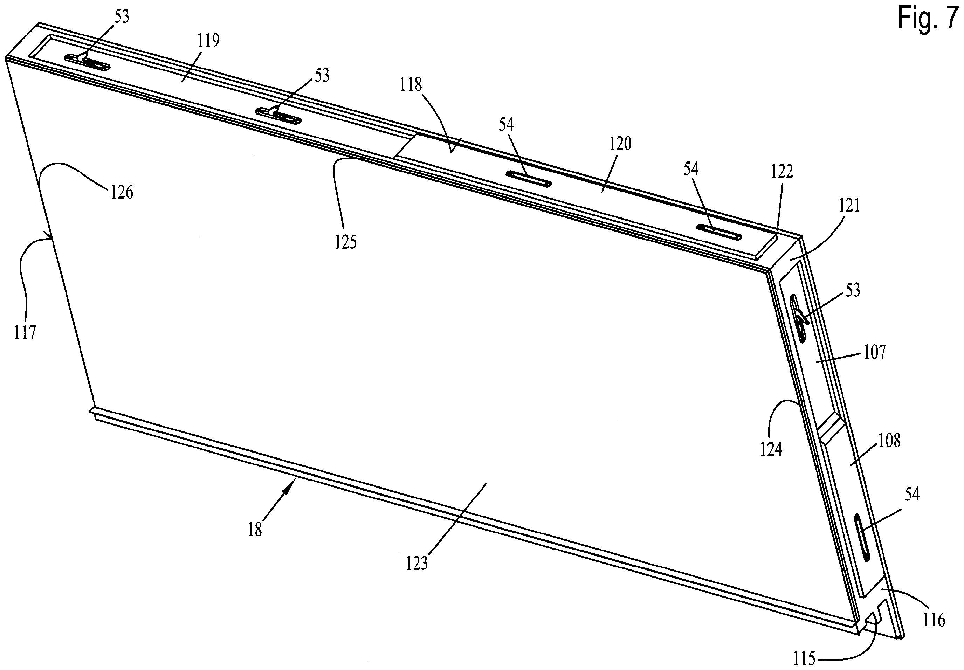

Zur Darstellung der Fig. 6 zeigt Fig. 7 beispielhaft das untere Wandelement 18 der Wand 5 aus Fig. 1. Auch hierzu ist anzumerken, dass die weiter vorgesehenen, unteren Wandelemente 13, 15 und 20 identisch ausgebildet sind, wie das Wandelement 18 nach Fig. 7, so dass die nachfolgende Beschreibung auch auf diese Wandelemente 13, 15 und 20 zu lesen ist.

Wie aus Fig. 7 erkennbar ist, bildet das Wandelement 18 ein nach unten gerichtetes Kupplungsprofil 115, mit welchem dieses Wandelement 18 beispielsweise in die Einsteckprofile 35, 37 und 39 der Bodenelemente 30, 31 und 32 aus Fig. 2 passend einsteckbar ist. Im Bereich dieses Kupplungsprofils sind ebenfalls Hakenelemente vorgesehen, wie dies zu Fig. 6 für das Kupplungsprofil 105 beschrieben ist. Diese sind aufgrund der Darstellung der Fig. 7 jedoch in der Zeichnung nicht erkennbar. Auch die vordere Stirnseite 116 des Wandelementes 18 weist entsprechend der Darstellung nach Fig. 6 ein Hakenelement 53 in seiner oberen Hälfte und ein Aufnahmeelement 54 in seiner unteren Hälfte auf. Im Bereich des Hakenelementes 53 ist wiederum eine entsprechende Vertiefung 107 und im Bereich des Aufnahmeelementes 54 eine Erhöhung 108 erkennbar. Auch die hintere Stirnfläche 117 des Wandelementes 18 ist mit einem derartigen Profil sowie mit einem Hakenelement 53 bzw. einem Aufnahmeelement 54 versehen (in der Zeichnung nicht erkennbar).

Die obere Stirnfläche 118 des Wandelementes 18 weist im Bereich einer sich etwa über die halbe Länge erstreckenden Vertiefung 119 zwei Hakenelemente 53 und im Bereich einer sich an die Vertiefung 119 anschließenden Erhöhung 120 zwei Aufnahmeelemente 54 auf. Aufgrund dieser Profilierung des Wandelementes 18 ist auf dieses das Wandelement 19 aus Fig. 6 mit einem entsprechenden Gegenprofil und entsprechend angeordneten Hakenelementen 53 bzw. Aufnahmeelementen 54 passend und präzise aufsetzbar, so dass diese nach dem Zusammenfügen über die Hakenelemente 53 miteinander feststehend verspannbar sind.

Es ist erkennbar, dass aufgrund der vorgesehenen Spannvorrichtungen, bestehend aus den Hakenelementen 53 und den Aufnahmeelementen 54, alle Bauteile der Klima-Prüfkammer 1 aus Fig. 1 feststehend miteinander verspannbar sind, bevor zumindest deren "innere" Blechtafeln miteinander verschweißt werden. So weist auch das Wandelement 18 einen mehrschichtigen Aufbau mit einem zentralen, thermisch isolierenden Kern 121 und beidseitig flächig aufgetragenen Blechtafeln 122 und 123 auf. Auch die "äußere" Blechtafel 122 ist in ihren Kantenbereichen rechtwinklig zu dem zentralen Kern 121 abgebogen ausgebildet. Die weiteren Kanten 124, 125 und 126 sind mit einer speziellen Formgebung abgebogen ausgebildet, wie ebenfalls später noch näher erläutert wird.

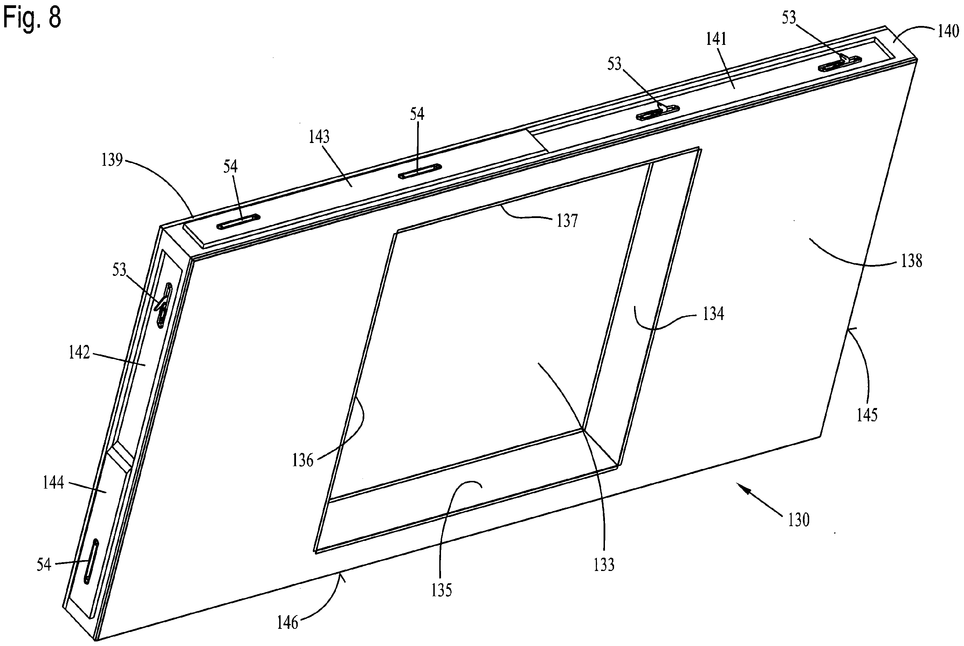

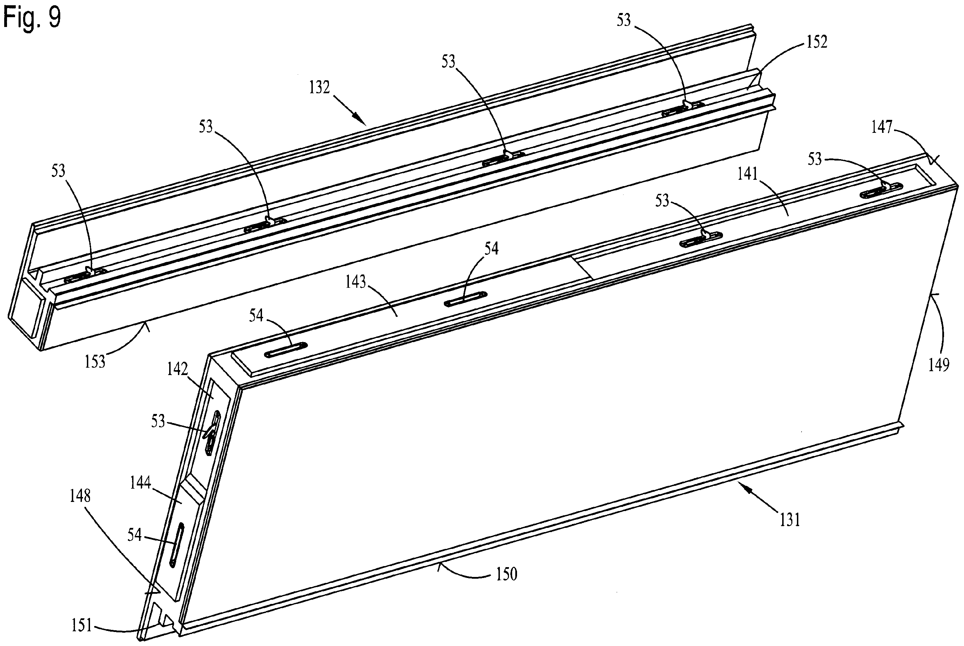

Die Fig. 8 und 9 zeigen eine perspektivische Darstellung der einzelnen Bauelemente der aus Fig. 1 nur andeutungsweise erkennbaren, rückseitigen Wand 7.

Wie aus den Fig. 8 und 9 ersichtlich ist, besteht die rückwärtige Wand 7 aus insgesamt drei Wandelementen 130, 131 und 132. Mit Bezug auf Fig. 8 ist erkennbar, dass das Wandelement 130 einen zentralen, rechteckigen Durchbruch 133 aufweist, welcher einen Fensterdurchbruch darstellt und umlaufend mittels vier Blechplatten 134, 135, 136 und 137 begrenzt ist. Diese Blechplatten 134 bis 137 sind mit einer "inneren" Blechtafel 138 sowie einer äußeren Blechtafel 139 verschweißt. Zwischen diesen beiden Blechtafeln 138 und 139 ist ein zentraler, thermisch isolierender Kern 140 vorgesehen, welcher umlaufend mit abwechselnd angeordneten Einsenkungen 141, 142 sowie Erhöhungen 143, 144 versehen ist. Im Bereich der Einsenkungen sind Hakenelemente 53 und im Bereich der Erhöhungen 143, 144 Aufnahmeelemente 54 vorgesehen.

Diese Ausgestaltung mit den Einsenkungen 141, 142 sowie den Erhöhungen 143 und 144 ist auch im Bereich der rechten Stirnfläche 145 und der unteren Stirnfläche 146 des Wandelementes 130 vorgesehen (in der Zeichnung nicht sichtbar). Mittels dieser Hakenelemente 53 und der Aufnahmeelemente 54 ist das Wandelement 130 einerseits mit dem unteren Wandelement 131 und dem oberen Wandelement 132 aus Fig. 9 koppelbar. Andererseits dienen diese Hakenelemente 53 und die Aufnahmeelemente 54 in den seitlichen Bereichen des Wandelementes 130 zur Kopplung des Wandelementes 130 mit den in Fig. 4 dargestellten, als Eckelemente ausgebildeten, Wandelementen 24 und 25.

Weiter ist aus Fig. 9 ersichtlich, dass das "untere" Wandelement 131 im Bereich seiner oberen Stirnfläche 147 und im Bereich seiner linken Stirnfläche 148 identisch ausgebildet ist wie das Wandelement 130 und dementsprechend ebenfalls Einsenkungen 141 bzw. 142 sowie Erhöhungen 143 und 144 aufweist als Formschlusselemente. Auch die rechte Stirnfläche 149 ist mit entsprechenden Einsenkungen und Erhöhungen versehen, wie dies für die linke Stirnfläche 148 dargestellt, jedoch in der Zeichnung nicht sichtbar ist. Auch im Bereich der Einsenkungen 141 sind entsprechende Hakenelemente 53 vorgesehen, während im Bereich der Erhöhungen 143 und 144 entsprechende Aufnahmeelemente 54 angeordnet sind. Im Bereich seiner unteren Stirnfläche 150 weist das untere Wandelement 131 ein Kupplungsprofil 151 auf, mit welchem dieses untere Wandelement in das Einsteckprofil 46 des Bodenelementes 34 aus Fig. 2 passend einsetzbar ist. Auch im Bereich dieses Kupplungsprofils 151 sowie des Einsteckprofils 46 sind entsprechende, in der Zeichnung nicht dargestellte, Hakenelemente 53 und Aufnahmeelemente 54 vorgesehen, so dass diese Bauelemente zusammen einen Spannverschluss bilden, über welchen das untere Wandelement 131 absolut feststehend mit dem Bodenelement 34 aus Fig. 2 in Verbindung bringbar ist.

Das obere Wandelement 132 bildet oberseitig ebenfalls ein Kupplungsprofil 152, in dessen Bereich mehrere Hakenelemente 53 angeordnet sind. Mit diesem Kupplungsprofil 152 ist das obere Wandelement 132 unterseitig formschlüssig mit dem "linken", hinteren Deckenelement 12 aus Fig. 1 der Klima-Prüfkammer 1 in Verbindung bringbar. Entsprechend weist dieses Deckenelement 12 in diesem Randbereich unterseitig ein Einsteckprofil auf, welches in entsprechender Anordnung mit Aufnahmeelementen versehen ist (in der Zeichnung nicht erkennbar), so dass das obere Wandelement 132 feststehend mit dem Deckenelement 12 im Bereich der Rückwand 7 verspannbar ist.

Unterseitig ist das Wandelement 132 im Bereich seiner unteren Stirnfläche 153 mit einem "Gegenprofil" mit Hakenelementen sowie Aufnahmeelementen versehen (in der Zeichnung nicht erkennbar), so dass das Wandelement 132 passend auf das Wandelement 130 aufsetzbar und über deren Hakenelemente und Aufnahmeelemente mit diesem feststehend verspannbar ist. Aufgrund der Einsenkungen und Erhöhungen des Wandelementes 130 und des entsprechend ausgebildeten Gegenprofils der unteren Stirnfläche 153 des Wandelementes 132, sind diese beiden Bauteile präzise, passend aufeinander setzbar und miteinander verspannbar.

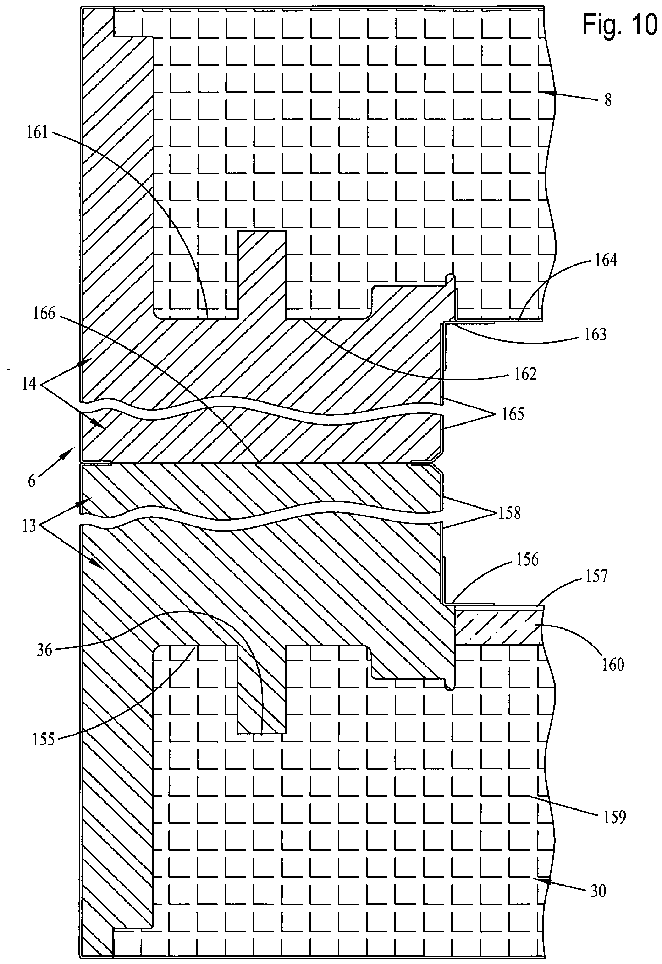

Hierzu zeigt Fig. 10 eine teilweise Schnittdarstellung der vorderen Wand 6 im Bereich ihrer beiden Wandelemente 13 und 14 einerseits mit dem aufgesetzten Deckenelement 8 sowie dem unterseitig angeordneten Bodenelement 30 aus Fig. 2.

Es ist erkennbar, dass das untere Wandelement 13 mit seinem Kupplungsprofil 155 mit dem Einsteckprofil 36 des Bodenelementes 30 formschlüssig in Eingriff steht. Im unteren Kantenbereich ist bei der dargestellten Ausführungsvariante zwischen dem Bodenelement 30 und dem Wandelement 13 ein Winkelblech 156 vorgesehen, welches einerseits mit einem oberseitig angeordneten Verstärkungsblech 157 des Bodenelementes 30 und andererseits mit der inneren Blechtafel 158 des Wandelementes 13 verschweißt ist. Diese Schweißverbindung ist dabei durchgehend und dicht ausgebildet. Zwischen dem zentralen, thermisch isolierenden Kern 159 des Bodenelementes 30 und dem oberseitig angeordneten Verstärkungsblech 157, weist das Bodenelement 30 (wie auch die anderen Bodenelemente) eine Verstärkungsplatte 160 auf, welche beispielsweise als sogenannte Multiplexplatte ausgebildet sein kann. Diese Multiplexplatte 160 dient zur Verstärkung des Bodenelementes 30, um auch höheren Belastungen beispielsweise beim Auffahren von Kraftfahrzeugen standhalten zu können.

Zwischen dem Verstärkungsblech 157 und der Verstärkungsplatte kann zusätzlich auch noch eine "dünne" Blechtafel vorgesehen sein, welche in der Zeichnung nicht dargestellt ist. Bei einer solchen Ausgestaltung kann das Verstärkungsblech vorzugsweise oberseitig auf die Blechtafel aufgeschraubt sein, wie dies andeutungsweise aus Fig. 2 erkennbar ist.

Weiter ist aus Fig. 10 erkennbar, dass das Deckenelement 8 zum oberen Wandelement 14 hin ein Kupplungsprofil 161 bildet, in welches das obere Wandelement 14 mit einem entsprechenden, als Gegenprofil ausgebildeten, Einsteckprofil 162 passend in Eingriff bringbar ist. Damit entsteht eine präzise, formschlüssige Steckverbindung zwischen dem oberen Wandelement 14 und dem Deckenelement 8.

Des Weiteren ist aus Fig. 10 erkennbar, dass im Verbindungsbereich des Deckenelementes 8 und des oberen Wandelementes 14 ebenfalls ein Winkelblech 163 vorgesehen ist, welches einerseits unterseitig mit einer inneren Blechtafel 164 des Deckenelementes und andererseits mit einer inneren Blechtafel 165 des Wandelementes 14 dicht verschweißt ist.

Bei der dargestellten Ausführungsvariante weisen die beiden "inneren" Kanten der Blechtafeln 158 und 165 des unteren Wandelementes 13 und des oberen Wandelementes 14 im Stoßbereich 166 der beiden Wandelemente 13 und 14 eine besondere Ausgestaltung auf, welche dazu dient, eine entsprechende Schweißverbindung im "inneren" Bereich dieser beiden Wandelemente 13 und 14 herzustellen.

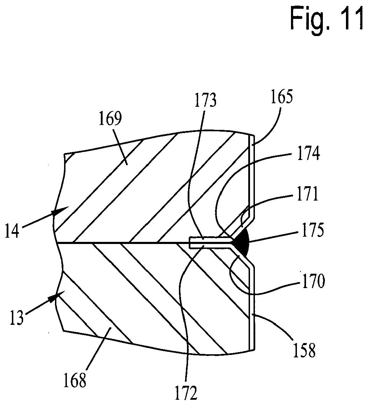

Hierzu zeigt Fig. 11 einen vergrößerten Ausschnitt dieses Verbindungsbereiches der beiden Wandelemente 13 und 14.

Es ist erkennbar, dass beide Blechtafeln 158 und 165 jeweils einen in den jeweils zugehörigen Kern 168 und 169 hinein gebogenen Verbindungsabschnitt 170 und 171 bilden, welcher etwa unter 45° zur Ebene der beiden Blechtafeln 158 und 165 verlaufend an diesen angeformt ist. Diese Verbindungabschnitte 170, 171 können alternativ auch bogenförmig verlaufend ausgebildet sein. An diese Verbindungsabschnitte 170, 171 schließt sich jeweils ein in den Kern 168 und 169 hineinragender quer bzw. rechtwinklig zur Ebene der Blechtafel 158 bzw. 165 verlaufender Anlagesteg 172 bzw. 173 an.

Aufgrund dieser besonderen Formgebung der beiden Blechtafeln 158 und 165 in deren Verbindungsbereich wird somit eine etwa V-förmig ausgebildete Verbindungsnut 174 gebildet, so dass die anschließend angebrachte Schweißnaht 175 zwingend "versenkt" zu den "Innenseiten" der beiden Blechtafeln 158 und 165 angeordnet ist. Damit ist sichergestellt, dass die Schweißnaht 175 nicht störend in den Innenraum der aus Fig. 1 erkennbaren Klima-Prüfkammer 1 hineinragt.

Die im Außenbereich wahlweise vorzusehenden Schweißnähte bzw. anzubringenden Schweißnähte, können in gleicher Art und Weise ausgestaltet sein, dies ist jedoch nicht zwingend notwendig.

Auch ist denkbar, dass die Wandelemente im Außenbereich nicht miteinander verschweißt sind, da die einzelnen Wandelemente bei den dargestellten Ausführungsbeispielen über die Spannverschlüsse feststehend miteinander in Verbindung stehen.

Sind keine Spannverschlüsse vorgesehen, so können die Außenbereiche mit ihren Blechtafeln anstatt miteinander verschweißt auch überlappend ausgebildet und miteinander verschraubt sein.

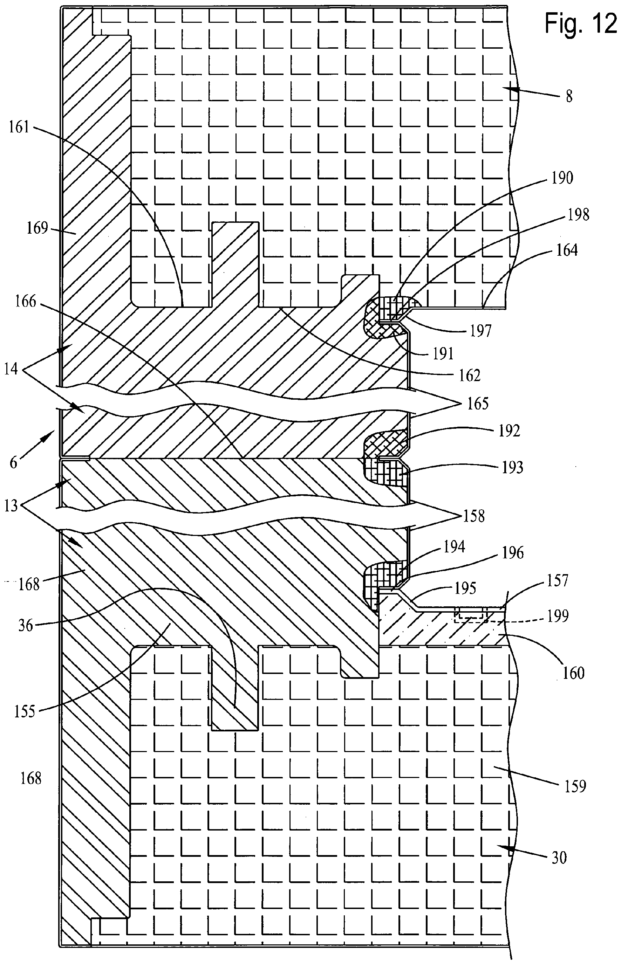

Fig. 12 zeigt die Darstellung aus Fig. 10 mit dem Deckenelement 8, der Wand 6 mit ihren beiden Wandelementen 13 und 14 sowie mit dem Bodenelement 30. Wie aus Fig. 12 ersichtlich ist, ist die Grundkonstruktion identisch mit der Grundkonstruktion aus Fig. 10, mit Ausnahme der Verbindungen zwischen dem Deckenelement 8 und dem oberen Wandelement 14 sowie dem Bodenelement 30 und dem unteren Wandelement 13. Bezüglich der gleichen Bauteile und gleichen Verbindungen, ist somit die Beschreibung zu Fig. 10 auch auf Fig. 12 zu lesen.

Aus Fig. 12 ist ersichtlich, dass die innere Blechtafel 164 des Deckenelementes 8 im Verbindungsbereich zur inneren Blechtafel 165 des oberen Wandelementes 14 konstruktiv anders ausgestaltetet ist als bei der Ausführungsvariante nach Fig. 10.

Das Gleiche gilt für den Verbindungsbereich des inneren Verstärkungsbleches 157 des Bodenelementes 30 zum unteren Wandelement 13 bzw. zu dessen innerer Blechtafel 158. Der Verbindungsbereich zwischen der inneren Blechtafel 158 des unteren Wandelementes 13 und der inneren Blechtafel 165 des oberen Wandelementes 14 ist identisch ausgebildet wie bei der Ausführungsvariante nach Fig. 10, so dass insbesondere die Beschreibung zu Fig. 11 auch auf diesen Verbindungsbereich zu lesen ist.

Je nach Wahl des Werkstoffes für den thermisch isolierenden Kern innerhalb der mehrschichtig aufgebauten Decken-, Wand- und Bodenelemente (8, 13, 14, 30), kann auch der Aufbau der Isolierschicht, insbesondere im Verbindungsbereich der Blechtafeln 164, 165 sowie 158 und 165 bzw. der Blechtafeln 157 und 158 mit einer zusätzlichen, thermisch hochfesten Isolierschicht ausgestaltet sein.

So ist aus Fig. 12 erkennbar, dass im Verbindungsbereich der inneren Blechtafel 164 des Deckenelementes 8 und der inneren Blechtafel 165 des oberen Wandelementes 14 zusätzlich hochthermisch beanspruchbare Zonen 190 und 191 bzw. 192 und 193 bzw. 194 vorgesehen sind. Besteht beispielsweise der Isolierwerkstoff des Kerns aus einem PU-Schaum, welcher insbesondere beim Anbringen der Schweißnähte in diesen Verbindungsbereichen Schaden nehmen könnte, so können diese Zonen 190, 191, 192, 193, 194 Verbindungsbereiche mit einem hochthermisch resistenten Werkstoff, wie beispielsweise Mineralwolle, Steinwolle oder dergleichen ausgebildet sein. Dies ist in Fig. 12 andeutungsweise durch unterschiedlich schraffierte Zonen 190 bis 194 erkennbar.

Des Weiteren ist aus Fig. 12 ersichtlich, dass das im Bodenbereich angeordnete Verstärkungsblech 157 zum Wandelement 13 hin im Randbereich zunächst über einen Verbindungsbereich 195 etwa 45° zum Wandelement 13 hin nach oben abgebogen ist. An diesen Verbindungsbereich 195 schließt sich "nach außen" hin ein horizontaler Anlagesteg 196 an. Die Blechtafel 158 des unteren Wandelementes ist in ihrem Kantenbereich zum Bodenelement 30 in gleicher Weise zweifach abgewinkelt ausgebildet, wie dies für den unteren Kantenbereich der Blechtafel 165 zu Fig. 11 beschrieben wurde. Dementsprechend wird auch im Verbindungsbereich vom unteren Wandelement 13 zum Bodenelement 30 über die Blechtafel 158 und das Verstärkungsblech 157 die gleiche V-förmige Nut gebildet, wie zum Verbindungsbereich nach Fig. 11 beschrieben.

In gleicher Weise ist auch die innere Blechtafel 164 des Deckenelementes 8 mit einem Verbindungsbereich 197 schräg nach unten, zum oberen Wandelement 14 hin unter etwa 45° abgebogen. An diesen Verbindungsbereich 197 schließt sich wiederum ein horizontal verlaufender Anlagesteg 198 an. Somit bildet auch das Deckenelement 8 mit seiner inneren Blechtafel 164 eine V-förmige Vertiefung mit dem oberen Kantenbereich des oberen Wandelementes 14. Dieser obere Kantenbereich des Wandelementes 14 ist hierbei identisch ausgebildet wie der obere Kantenbereich des unteren Wandelementes 13, wie zu Fig. 11 beschrieben. Dementsprechend können die zu Fig. 10 beschriebenen Winkelbleche 163 und 156 entfallen. Diese Art der Ausbildung des Verbindungsbereiches, insbesondere der dann zu erzeugenden Schweißnähte, hat den Vorteil, dass die Schweißnahtlänge erheblich verringert werden kann. Des Weiteren ist insbesondere der Bodenbereich wesentlich einfacher zu reinigen.

Im Bodenbereich bzw. im Verstärkungsblech 157 kann noch ein eingelassener Ablaufkanal 199 vorgesehen sein, welcher in Fig. 12 gestrichelt dargestellt ist. Dieser Ablaufkanal 199 ist durch einen einfachen Biegevorgang in das Verstärkungsblech 157 eingebracht und ist dementsprechend einerseits äußerst einfach zu reinigen und absolut dicht. Da der Ablaufkanal 199 aus einer "Blechabwicklung" gekantet ist, entfallen zusätzliche Verbindungen durch Verschweißen, so dass die Verbindung zwischen dem Bodenblech 157 und dem Ablaufkanal 199 absolut spannungsfrei ist.

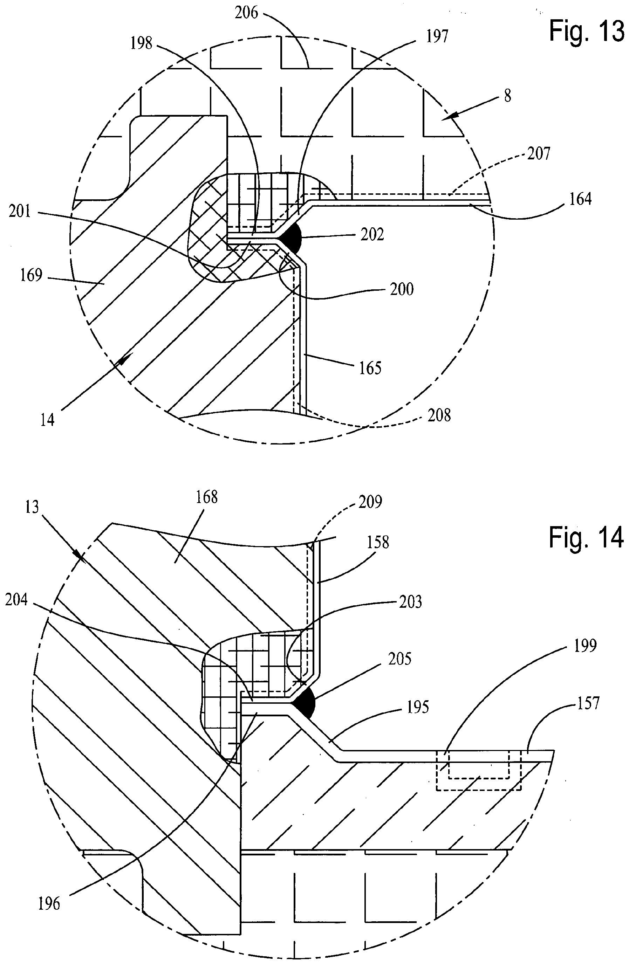

Der Ablaufkanal 199 ist in den Fig. 12 und 14 nur schematisch dargestellt. Dieser Ablaufkanal 199 kann derart dimensioniert sein, des der Ablaufkanal 199 in den isolierenden Kern 159 des Bodenelementes 30 hineinragt. Beispielsweis kann der Ablaufkanal 199 eine quadratische Querschnittsform mit den Maßen 60 mm x 60 mm aufweisen.

Fig. 13 und Fig. 14 zeigen jeweils vergrößerte Darstellungen der Verbindungsbereiche des Deckenelementes 8 zum Wandelement 14 bzw. vom Bodenelement 30 zum Wandelement 13 im Bereich der inneren Blechtafeln 165 bzw. 158. Diese Verbindungsbereiche sind analog des Verbindungsbereiches zwischen den beiden inneren Blechtafeln 158 und 165 nach Fig. 11 ausgebildet.

Aus Fig. 13 ist erkennbar, dass die innere Blechtafel 164 des Deckenelementes 8 im Verbindungsbereich bzw. Randbereich zum oberen Wandelement 14 hin einen nach unter etwa unter 45° abgebogenen Verbindungsbereich 197 bildet, welcher beim dargestellten Ausführungsbeispiel geradlinig verläuft. Dieser Verbindungsbereich 197 könnte aber auch bogenförmig verlaufend ausgestaltet sein. An diesen Verbindungsbereich 197 schließt sich nach außen zum Wandelement 14 hin ein parallel zum Deckenelement 8, horizontal verlaufender Anlagesteg 198 an. Die innere Blechtafel 165 des Wandelementes 14 bildet in ihrem oberen Randbereich ebenfalls einen unter etwa 45° zum Ebene des Wandelementes in dessen Kern 169 "hineinragenden" Verbindungsbereich 200. An diesen Verbindungsbereich 200 schließt sich nach außen hin ein quer zur Ebene des Wandelementes 14 verlaufender und damit im montierten Zustand parallel zum Anlagesteg 198 der Blechtafel 164 verlaufender Anlagesteg 201 an. Im Montierten Zustand liegen die Anlagestege 198 und 201 aneinander an und die beiden sich vertikal gegenüberliegenden Verbindungsbereiche 197 und 200 bilden eine V-förmige Vertiefung. Analog zum Verbindungsbereich der beiden Wandelemente 13 und 14 aus Fig. 11 ist in dieser V-förmigen Vertiefung eine Schweißnaht 202 vorgesehen. Diese Schweißnaht 202 ist versenkt "hinter" der Blechtafel 165 und der Blechtafel 164 angeordnet.

Aus Fig. 14 ist erkennbar, dass die innere Blechtafel 157 bzw. Verstärkungsplatte 157 des Bodenelementes 30 im Verbindungsbereich bzw. Randbereich zum unteren Wandelement 13 hin einen nach oben etwa unter 45° abgebogenen Verbindungsbereich 195 bildet, welcher beim dargestellten Ausführungsbeispiel geradlinig verläuft. Dieser Verbindungsbereich 195 könnte aber auch bogenförmig verlaufend ausgestaltet sein. An diesen Verbindungsbereich 195 schließt sich nach außen zum Wandelement 13 hin ein parallel zu Bodenelement 30, horizontal verlaufender Anlagesteg 198 an. Die innere Blechtafel 158 des Wandelementes 13 bildet in ihrem unteren Randbereich ebenfalls einen unter etwa 45° zum Ebene des Wandelementes 13 in dessen Kern 168 "hineinragenden" Verbindungsbereich 203. An diesen Verbindungsbereich 203 schließt sich nach außen hin ein quer zur Ebene des Wandelementes 13 verlaufender und damit im montierten Zustand parallel zum Anlagesteg 196 der Blechtafel 157 bzw. dem Verstärkungsblech 157 verlaufender Anlagesteg 204 an. Im Montierten Zustand liegen die Anlagestege 196 und 204 aneinander an und die beiden sich vertikal gegenüberliegenden Verbindungsbereiche 200 und 203 bilden eine V-förmige Vertiefung. Analog zum Verbindungsbereich der beiden Wandelemente 13 und 14 aus Fig. 11, ist in dieser V-Vertiefung eine Schweißnaht 205 vorgesehen. Diese Schweißnaht 205 ist versenkt "hinter" der Blechtafel 158 und der Blechtafel 157 angeordnet.

Weiter ist aus den Fig. 13 und 14 noch erkennbar, dass die Blechtafeln 164, 165 und 158 nach innen, zum zugehören Kern 168, 169 bzw. 206 hin eine thermisch hoch belastbare Beschichtung oder aufgeklebt Isolierplatte aufweisen können, welche in der Zeichnung gestrichelt dargestellt und mit dem Bezugszeichen 207, 208 und 209 gekennzeichnet sind. Solcher Isolierschichten könne bei Klima-prüfkammern notwendig sein, sofern die isolierenden Kerne beispielsweis aus einem nicht so hoch thermisch belastbaren Material wie PU-Schaum bestehen und die Temperaturbereiche in der Klima-Prüfkammer über längere Zeiträume über 200 °C liegen. Diese Isolierschichten können alternativ oder ergänzend zu den Zonen 190 bis 194 vorgesehen sein.

Weiter ist aus der vergrößerten Darstellung der Fig. 14 noch in gestrichelten Linien der im Bodenelement 30 "eingelassenen" Kanal 199 erkennbar.

Aufgrund der speziellen Ausgestaltung, insbesondere der wannenartigen Ausgestaltung des Bodenelementes 30 aus Fig. 12, ist insbesondere eine äußerst einfache Reinigung der gesamten Bodenplatte durchführbar. Des Weiteren werden durch die Ausgestaltungen der Schweißverbindungen zwischen dem Deckenelement und dem Wandelement bzw. dem Bodenelement und dem Wandelement, wesentlich kürzere Schweißnähte erforderlich, so dass die Herstellungskosten weiter vermindert sind.

An dieser Stelle sei noch angemerkt, dass anstatt der thermisch hochfesten Zonen 190 bis 194 die entsprechend zugehörigen inneren Blechtafeln bzw. Verstärkungsbleche auch mit einer thermisch hochfesten, isolierenden plattenartig ausgebildeten Beschichtung versehen sein können, was insbesondere auch den Vorteil hat, dass eine mit solchen Wand-, Decken- und Bodenelementen ausgestattete Klimaprüfkammer auch für äußerst hohe Temperaturen einsetzbar ist, ohne dass ein isolierender, beispielsweise aus PU-Schaum bestehender Kern dieser Elemente, auch bei längerer Einwirkung von höheren Temperaturen, beispielsweise über 200°C, keinen Schaden nehmen können.

## Patentansprüche

1. Klima-Prüfkammer (1) mit einer Decke (2), einem Boden (3) und mehreren Wänden (4, 5, 6, 7), welche jeweils mehrschichtig aufgebaut sind und jeweils einen thermisch isolierenden Kern (109, 121, 140, 159, 168, 169) aufweisen, welcher mittels Blechtafeln (48, 49, 40, 51, 52, 110, 111, 122, 123, 138, 139, 157, 158, 164, 165) außen- und innenseitig flächig abgedeckt ist,
**dadurch gekennzeichnet,**
**dass** die Decke (2) aus mehreren Deckenelementen (8, 9, 10, 11, 12), der Boden (3) aus mehreren Bodenelementen (30, 31, 32, 33, 34) und die Wände (4, 5, 6, 7) aus mehreren Wandelementen (13, 14, 15, 16, 17, 18, 19, 20, 21, 22, 23, 24, 25, 26, 27, 130, 131, 132) bestehen und,
**dass** die Wandelemente (13, 14, 15, 16, 17, 18, 19, 20, 21, 22, 23, 24, 25, 26, 27) mit ihren inneren Blechtafeln (111, 123, 138, 157, 158, 164, 165) in deren Stoßbereichen (166) miteinander verschweißt sind und die Blechtafeln (111, 123, 138, 157, 158, 164, 165) zur Bildung der innenseitigen Schweißnähte (175) in den thermisch isolierenden Kern (109, 121, 140, 159, 168, 169) hineinragend abgebogen ausgebildet sind und jeweils quer zur Ebene der Blechtafeln (111, 123, 138, 157, 158, 164, 165) verlaufende, nach innen gerichtete Anlagestege (172, 173) bilden, dass der Verbindungsbereich (170, 171) zwischen der jeweiligen Blechtafel (111, 123, 138, 157, 158, 164, 165) und dem jeweiligen Anlagesteg (172, 173) derart bogenförmig oder geradlinig schräg verlaufend ausgebildet ist, dass zwischen zwei aneinander stoßenden Blechtafeln (111, 123, 138, 157, 158, 164, 165) eine Vertiefung (174) gebildet wird,
**dass** die jeweiligen Schweißnähte (175) in diesen Vertiefungen (174) zwischen den Blechtafeln (111, 123, 138, 157, 158, 164, 165) vorgesehen sind und,
**dass** die Schweißnähte (175) nach deren Fertigstellung nicht über die Oberfläche der Blechtafeln (111, 123, 138, 157, 158, 164, 165) hinaus stehen.

2. Klima-Prüfkammer nach Anspruch 1, **dadurch gekennzeichnet, dass** die Deckenelemente (8, 9, 10, 11, 12) über Spannverschlüsse (53, 54) feststehend miteinander verspannt sind und/oder dass die Bodenelemente (30, 31, 32, 33, 34) über Spannverschlüsse (53, 54) feststehend miteinander verspannt sind und/oder dass die Wandelemente (13, 14, 15, 16, 17, 18, 19, 20, 21, 22, 23, 24, 25, 26, 27, 130, 131, 132) über Spannverschlüsse (53, 54) feststehend miteinander verspannt sind.

3. Klima-Prüfkammer nach Anspruch 1 oder 2, **dadurch gekennzeichnet, dass** die Wandelemente (13, 14, 15, 16, 17, 18, 19, 20, 21, 22, 23, 24, 25, 26, 27, 131, 132) Kupplungsprofile (69, 70, 83, 95, 96, 105, 115, 151, 152, 155, 161, 180, 181, 182, 183) aufweisen, mit welchen die Wandelemente in Einsteckprofile (35, 36, 37, 38, 39, 40, 41, 42, 43, 44, 45, 46) der Bodenelemente (30, 31, 32, 33, 34) und mit Einsteckprofilen (162) der Deckenelemente (8) formschlüssig, passend in Eingriff bringbar sind.

4. Klima-Prüfkammer nach Anspruch 1, 2 oder 3, **dadurch gekennzeichnet, dass** die Bodenelemente (30, 31, 32, 33, 34) in ihren einander zugewandten Stirnflächen Formschlussprofile (61, 62) aufweisen, über welche die Bodenelemente (30, 31, 32, 33, 34) formschlüssig, passend miteinander in Eingriff bringbar sind.

5. Klima-Prüfkammer nach einem der Ansprüche 1 bis 4, **dadurch gekennzeichnet, dass** die Wandelemente (13, 14, 15, 16, 17, 18, 19, 20, 21, 22, 23, 24, 25, 26, 27, 130, 131, 132) im Bereich ihrer einander zugewandten Stirnflächen (72, 73, 78, 79, 80, 81, 97, 98, 106, 116, 117, 118, 145, 146, 147, 148, 149, 153) Formschlussprofile (82, , 85, 86, 87, 88, 89, 90, 91, 92, 107, 108, 141, 142, 143, 144) aufweisen, über welche die Wandelemente (13, 14, 15, 16, 17, 18, 19, 20, 21, 22, 23, 24, 25, 26, 27, 130, 131, 132) formschlüssig, passend miteinander in Eingriff bringbar sind.

6. Klima-Prüfkammer nach einem der Ansprüche 1 bis 5, **dadurch gekennzeichnet, dass** die Bodenelemente (30, 31, 32, 33, 34) oberseitig mit verstärkten Bodenblechen (48, 49, 59, 51) versehen sind.

7. Klima-Prüfkammer nach Anspruch 6, **dadurch gekennzeichnet, dass** die Bodenelemente (30, 31, 32, 33, 34) unterhalb ihrer Bodenbleche (48, 49, 59, 51) oder unterhalb ihrer oberseitigen Blechtafeln (157) mit einer Verstärkungsplatte (160) versehen sind.

8. Klima-Prüfkammer nach einem der Ansprüche 1 bis 7, **dadurch gekennzeichnet, dass** die Wandelemente (13, 14) über Winkelbleche (156, 163) feststehend mit den Deckenelementen (14) einerseits und mit den Bodenelementen (30) andererseits in Verbindung stehen und, dass die Winkelbleche (156, 163) mit den jeweils benachbarten Wandelementen (13, 14), den benachbarten Deckenelementen (8) und den benachbarten Bodenelementen (30) dicht verschweißt sind.

9. Klima-Prüfkammer nach einem der Ansprüche 1 bis 7, **dadurch gekennzeichnet, dass** die oberen, inneren Bodenbleche (157) der Bodenelemente (3) wannenartig ausgebildet sind und in ihren Randbereichen zum jeweils benachbarten Wandelement (13) nach oben abgebogene Verbindungsbereiche (195) bilden, an welche sich nach außen gerichtete, parallel zur Ebene des Bodenelementes (30) horizontal verlaufende Anlagestege (196) anschließen, und dass die der Bodenplatten (30) benachbarten Randbereiche der inneren Blechtafeln (158) der Wandelemente (13) zur Bildung der innenseitigen Schweißnähte (205) in den thermisch isolierenden Kern (168) des Wandelementes (13) hineinragend abgebogen ausgebildete Verbindungsbereiche (203) bilden, an welche sich jeweils quer zur Ebene der Blechtafeln (158) verlaufende, nach innen gerichtete Anlagestege (204) anschließen, und dass der Verbindungsbereich (203) zwischen der jeweiligen Blechtafel (158) und dem jeweiligen Anlagesteg (204) derart bogenförmig oder geradlinig schräg verlaufend ausgebildet ist, dass zwischen den aneinander stoßenden Blechtafeln (158) und dem Bodenblech (157) eine Vertiefung gebildet wird, und
dass die jeweiligen Schweißnähte (205) in diesen Vertiefungen vorgesehen sind.

10. Klima-Prüfkammer nach einem der Ansprüche 1 bis 9, **dadurch gekennzeichnet, dass** die unteren, inneren Blechtafeln (164) der Deckenelemente (8) in ihren Randbereichen zum jeweils benachbarten Wandelement (14) nach unten abgebogene Verbindungsbereiche (197) bilden, an welche sich nach außen gerichtete, parallel zur Ebene des Deckenelementes (8) horizontal verlaufende Anlagestege (197) anschließen, und dass die den Deckenelementen (8) benachbarten Randbereiche der inneren Blechtafeln (165) der Wandelemente (14) zur Bildung der innenseitigen Schweißnähte (202) in den thermisch isolierenden Kern (169) des Wandelementes (14) hineinragend abgebogen ausgebildete Verbindungsbereiche (200) bilden, an welche sich jeweils quer zur Ebene der Blechtafeln (165) verlaufende, nach innen gerichtete Anlagestege (201) anschließen, und dass der Verbindungsbereich (200) zwischen der jeweiligen Blechtafel (165) und dem jeweiligen Anlagesteg (201) derart bogenförmig oder geradlinig schräg verlaufend ausgebildet ist, dass zwischen den aneinander stoßenden Blechtafeln (165) und der Blechtafeln (164) eine Vertiefung gebildet wird, und
dass die jeweiligen Schweißnähte (202) in diesen Vertiefungen vorgesehen sind.

11. Klima-Prüfkammer nach einem der Ansprüche 1 bis 10, **dadurch gekennzeichnet, dass** der isolierende Kern (168, 169) im Bereich der Schweißnähte (202, 205) Zonen (190, 191, 192, 193, 194) aufweist, welche aus einem thermisch hoch widerstandfähigen Material bestehen.

12. Klima-Prüfkammer nach einem der Ansprüche 1 bis 11, **dadurch gekennzeichnet, dass** die Blechtafeln (158, 165) zum thermisch isolierende Kern (168, 169) hin mit einer thermisch hoch widerstandfähigen Beschichtung versehen und/oder Isolierplatten (207, 208, 209) beschichtet sind.

13. Klima-Prüfkammer nach einem der Ansprüche 1 bis 12, **dadurch gekennzeichnet, dass** die Wandelemente (23, 24, 25, 26) in den Eckbereichen der Klimaprüfkammer (1) als Eckelemente ausgebildet sind, welche jeweils zum benachbarten Wandelement (13, 14, 15, 16, 18, 19, 21, 22) einen vorstehenden Wandteil (65, 66, 74, 75, 76, 77) bilden.

## Claims

1. Climate test chamber (1) with a ceiling (2), a floor (3) and a number of walls (4, 5, 6, 7), which are in each case constructed in a multilayered manner and have in each case a thermally insulating core (109, 121, 140, 159, 168, 169), which is covered over its surface area on the outside and the inside by means of metal sheets (48, 49, 40, 51, 52, 110, 111, 122, 123, 138, 139, 157, 158, 164, 165),
**characterized**
**in that** the ceiling (2) consists of a number of ceiling elements (8, 9, 10, 11, 12), the floor (3) consists of a number of floor elements (30, 31, 32, 33, 34) and the walls (4, 5, 6, 7) consists of a number of wall elements (13, 14, 15, 16, 17, 18, 19, 20, 21, 22, 23, 24, 25, 26, 27, 130, 131, 132) and,
**in that** the wall elements (13, 14, 15, 16, 17, 18, 19, 20, 21, 22, 23, 24, 25, 26, 27) are welded to one another by their inner metal sheets (111, 123, 138, 157, 158, 164, 165) in the abutting regions (166) thereof and the metal sheets (111, 123, 138, 157, 158, 164, 165) are formed as bent away, protruding into the thermally insulating core (109, 121, 140, 159, 168, 169), to form the inner-side welds (175) and form inwardly directed bearing webs (172, 173) in each case running transversely in relation to the plane of the metal sheets (111, 123, 138, 157, 158, 164, 165),
**in that** the connecting region (170, 171) between the respective metal sheet (111, 123, 138, 157, 158, 164, 165) and the respective bearing web (172, 173) is formed in such an arcuately-sloping or straight-sloping manner that a depression (174) is formed between two mutually abutting metal sheets (111, 123, 138, 157, 158, 164, 165),
**in that** the respective welds (175) are provided in these depressions (174) between the metal sheets (111, 123, 138, 157, 158, 164, 165) and
**in that**, after their completion, the welds (175) do not protrude beyond the surface of the metal sheets (111, 123, 138, 157, 158, 164, 165).

2. Climate test chamber according to Claim 1, **characterized in that** the ceiling elements (8, 9, 10, 11, 12) are firmly clamped together by means of toggle-type fasteners (53, 54) and/or **in that** the floor elements (30, 31, 32, 33, 34) are firmly clamped together by means of toggle-type fasteners (53, 54) and/or **in that** the wall elements (13, 14, 15, 16, 17, 18, 19, 20, 21, 22, 23, 24, 25, 26, 27, 130, 131, 132) are firmly clamped together by means of toggle-type fasteners (53, 54).

3. Climate test chamber according to Claim 1 or 2, **characterized in that** the wall elements (13, 14, 15, 16, 17, 18, 19, 20, 21, 22, 23, 24, 25, 26, 27, 131, 132) have coupling profiles (69, 70, 83, 95, 96, 105, 115, 151, 152, 155, 161, 180, 181, 182, 183), by which the wall elements can be brought into form-fitting engagement in insertion profiles (35, 36, 37, 38, 39, 40, 41, 42, 43, 44, 45, 46) of the floor elements (30, 31, 32, 33, 34) and with insertion profiles (162) of the ceiling elements (8).

4. Climate test chamber according to Claim 1, 2 or 3, **characterized in that** the floor elements (30, 31, 32, 33, 34) have in their mutually facing end faces form-fitting profiles (61, 62) by means of which the floor elements (30, 31, 32, 33, 34) can be brought into form-fitting engagement with one another.

5. Climate test chamber according to one of Claims 1 to 4, **characterized in that** the wall elements (13, 14, 15, 16, 17, 18, 19, 20, 21, 22, 23, 24, 25, 26, 27, 130, 131, 132) have in the region of their mutually facing end faces (72, 73, 78, 79, 80, 81, 97, 98, 106, 116, 117, 118, 145, 146, 147, 148, 149, 153) form-fitting profiles (82, , 85, 86, 87, 88, 89, 90, 91, 92, 107, 108, 141, 142, 143, 144) by means of which the wall elements (13, 14, 15, 16, 17, 18, 19, 20, 21, 22, 23, 24, 25, 26, 27, 130, 131, 132) can be brought into form-fitting engagement with one another.

6. Climate test chamber according to one of Claims 1 to 5, **characterized in that** the floor elements (30, 31, 32, 33, 34) are provided on the upper side with reinforced floor plates (48, 49, 59, 51).

7. Climate test chamber according to Claim 6, **characterized in that** the floor elements (30, 31, 32, 33, 34) are provided underneath their floor plates (48, 49, 59, 51) or underneath their upper-side metal sheets (157) with a reinforcing plate (160).

8. Climate test chamber according to one of Claims 1 to 7, **characterized in that** the wall elements (13, 14) are firmly in connection with the ceiling elements (14) on the one hand and with the floor elements (30) on the other hand by means of angle plates (156, 163) and **in that** the angle plates (156, 163) are welded in a sealed manner to the respectively adjacent wall elements (13, 14), the adjacent ceiling elements (8) and the adjacent floor elements (30).

9. Climate test chamber according to one of Claims 1 to 7, **characterized in that** the upper, inner floor plates (157) of the floor elements (3) are formed in a tray-like manner and form in their edge regions in relation to the respectively adjacent wall element (13) upwardly bent-away connecting regions (195), which are adjoined by outwardly directed bearing webs (196) running horizontally, parallel to the plane of the floor element (30), and **in that** the edge regions of the inner metal sheets (158) of the wall elements (13) that are adjacent to the floor plates (30) form connecting regions (203) which are formed as bent away, protruding into the thermally insulating core (168) of the wall element (13), to form the inner-side welds (205) and are adjoined by inwardly directed bearing webs (204) in each case running transversely in relation to the plane of the metal sheets (158), and **in that** the connecting region (203) between the respective metal sheet (158) and the respective bearing web (204) is formed in such an arcuately-sloping or straight-sloping manner that a depression is formed between the mutually abutting metal sheets (158) and the floor plate (157), and
**in that** the respective welds (205) are provided in these depressions.

10. Climate test chamber according to one of Claims 1 to 9, **characterized in that** the lower, inner metal sheets (164) of the ceiling elements (8) form in their edge regions in relation to the respectively adjacent wall element (14) downwardly bent-away connecting regions (197), which are adjoined by outwardly directed bearing webs (197) running horizontally, parallel to the plane of the ceiling element (8), and **in that** the edge regions of the inner metal sheets (165) of the wall elements (14) that are adjacent to the ceiling elements (8) form connecting regions (200) which are formed as bent away, protruding into the thermally insulating core (169) of the wall element (14), to form the inner-side welds (202) and are adjoined by inwardly directed bearing webs (201) in each case running transversely in relation to the plane of the metal sheets (165), and **in that** the connecting region (200) between the respective metal sheet (165) and the respective bearing web (201) is formed in such an arcuately-sloping or straight-sloping manner that a depression is formed between the mutually abutting metal sheets (165) and the metal sheets (164), and
**in that** the respective welds (202) are provided in these depressions.

11. Climate test chamber according to one of Claims 1 to 10, **characterized in that** the insulating core (168, 169) has in the region of the welds (202, 205) zones (190, 191, 192, 193, 194) that consist of a thermally highly resistant material.

12. Climate test chamber according to one of Claims 1 to 11, **characterized in that** the metal sheets (158, 165) are provided towards the thermally insulating core (168 169) with a thermally highly resistant covering and/or are covered with insulating panels (207, 208 209).

13. Climate test chamber according to one of Claims 1 to 12, **characterized in that** the wall elements (23, 24, 25, 26) are formed in the corner regions of the climate test chamber (1) as corner elements that form in each case in relation to the adjacent wall element (13, 14, 15, 16, 18, 19, 21, 22) a protruding wall part (65, 66, 74, 75, 76, 77).

## Revendications

1. Chambre de test climatisée (1) avec un plafond (2), un sol (3) et plusieurs parois (4, 5, 6, 7), qui sont chaque fois construits en plusieurs couches et qui présentent chaque fois un coeur thermiquement isolant (109, 121, 140, 159, 168, 169), qui est recouvert à plat extérieurement et intérieurement au moyen de panneaux de tôle (48, 49, 40, 51, 52, 110, 111, 122, 123, 138, 139, 157, 158, 164, 165),
**caractérisée en ce que**
le plafond (2) se compose de plusieurs éléments de plafond (8, 9, 10, 11, 12), le sol (3) se compose de plusieurs éléments de sol (30, 31, 32, 33, 34) et les parois (4, 5, 6, 7) se composent de plusieurs éléments de paroi (13, 14, 15, 16, 17, 18, 19, 20, 21, 22, 23, 24, 25, 26, 27, 130, 131, 132),
les éléments de paroi (13, 14, 15, 16, 17, 18, 19, 20, 21, 22, 23, 24, 25, 26, 27) sont soudés l'un à l'autre avec leurs panneaux de tôle intérieurs (111, 123, 138, 157, 158, 164, 165) dans leurs régions de bout (166) et les panneaux de tôle (111, 123, 138, 157, 158, 164, 165) sont de forme pliée pénétrant dans le coeur thermiquement isolant (109, 121, 140, 159, 168, 169) pour la formation des cordons de soudure intérieurs (175) et forment des nervures d'appui (172, 173) dirigées vers l'intérieur s'étendant chaque fois transversalement au plan des panneaux de tôle (111, 123, 138, 157, 158, 164, 165),
la zone de liaison (170, 171) entre le panneau de tôle respectif (111, 123, 138, 157, 158, 164, 165) et la nervure d'appui respective (172, 173) est réalisée en forme d'arc ou de ligne droite s'étendant en oblique, de telle manière qu'un creux (174) soit formé entre deux panneaux de tôle (111, 123, 138, 157, 158, 164, 165) placés bout à bout l'un par rapport à l'autre,
les cordons de soudure respectifs (175) sont prévus dans ces creux (174) entre les panneaux de tôle (111, 123, 138, 157, 158, 164, 165), et
après leur réalisation, les cordons de soudure (175) ne sont pas saillants au-dessus de la surface des panneaux de tôle (111, 123, 138, 157, 158, 164, 165).

2. Chambre de test climatisée selon la revendication 1, **caractérisée en ce que** les éléments de plafond (8, 9, 10, 11, 12) sont solidement accrochés l'un à l'autre au moyen de fermetures à serrage (53, 54) et/ou **en ce que** les éléments de sol (30, 31, 32, 33, 34) sont solidement accrochés l'un à l'autre au moyen de fermetures à serrage (53, 54) et/ou **en ce que** les éléments de paroi (13, 14, 15, 16, 17, 18, 19, 20, 21, 22, 23, 24, 25, 26, 27, 130, 131, 132) sont solidement accrochés l'un à l'autre au moyen de fermetures à serrage (53, 54).

3. Chambre de test climatisée selon la revendication 1 ou 2, **caractérisée en ce que** les éléments de paroi (13, 14, 15, 16, 17, 18, 19, 20, 21, 22, 23, 24, 25, 26, 27, 130, 131, 132) présentent des profilés de couplage (69, 70, 83, 95, 96, 105, 115, 151, 152, 155, 161, 180, 181, 182, 183), avec lesquels les éléments de paroi peuvent être mis en prise de façon ajustée par emboîtement dans des profilés enfichables (35, 36, 37, 38, 39, 40, 41, 42, 43, 44, 45, 46) des éléments de sol (30, 31, 32, 33, 34) et avec des profilés enfichables (162) des éléments de plafond (8).

4. Chambre de test climatisée selon la revendication 1, 2 ou 3, **caractérisée en ce que** les éléments de sol (30, 31, 32, 33, 34) présentent dans leurs faces frontales tournées l'une vers l'autre des profilés à emboîtement (61, 62), au moyen desquels les éléments de sol (30, 31, 32, 33, 34) peuvent être mis en prise l'un avec l'autre de façon ajustée par emboîtement.

5. Chambre de test climatisée selon l'une quelconque des revendications 1 à 4, **caractérisée en ce que** les éléments de paroi (13, 14, 15, 16, 17, 18, 19, 20, 21, 22, 23, 24, 25, 26, 27, 130, 131, 132) présentent dans la région de leurs faces frontales tournées l'une vers l'autre (72, 73, 78, 79, 80, 81, 97, 98, 106, 116, 117, 118, 145, 146, 147, 148, 149, 153) des profilés à emboîtement (82, ,85, 86, 87, 88, 89, 90, 91, 92, 107, 108, 141, 142, 143, 144), au moyen desquels les éléments de paroi (13, 14, 15, 16, 17, 18, 19, 20, 21, 22, 23, 24, 25, 26, 27, 130, 131, 132) peuvent être mis en prise l'un avec l'autre de façon ajustée par emboîtement.

6. Chambre de test climatisée selon l'une quelconque des revendications 1 à 5, **caractérisée en ce que** les éléments de sol (30, 31, 32, 33, 34) sont munis sur le côté supérieur de tôles de sol renforcées (48, 49, 59, 51).

7. Chambre de test climatisée selon la revendication 6, **caractérisée en ce que** les éléments de sol (30, 31, 32, 33, 34) sont munis d'une plaque de renfort (160) en dessous de leurs tôles de sol (48, 49, 59, 51) ou en dessous de leurs panneaux de tôle supérieurs (157).

8. Chambre de test climatisée selon l'une quelconque des revendications 1 à 7, **caractérisée en ce que** les éléments de paroi (13, 14) sont solidement en liaison par des tôles pliées (156, 163) avec les éléments de plafond (14) d'une part et avec les éléments de sol (30) d'autre part, et **en ce que** les tôles pliées (156, 163) sont soudées de façon étanche respectivement aux éléments de paroi voisins (13, 14), aux éléments de plafond voisins (8) et aux éléments de sol voisins (30).

9. Chambre de test climatisée selon l'une quelconque des revendications 1 à 7, **caractérisée en ce que** les tôles de sol intérieures supérieures (157) des éléments de sol (3) sont réalisées en forme de cuvette et forment dans leurs régions de bord vers l'élément de paroi respectivement voisin (13) des zones de liaison pliées vers le haut (195), auxquelles se raccordent des nervures d'appui (196) orientées vers l'extérieur et s'étendant horizontalement parallèlement au plan de l'élément de sol (30), et **en ce que** les régions de bord des panneaux de tôle intérieurs (158) des éléments de paroi (13) voisines des plaques de sol (30) forment des zones de liaison pliées (203) pénétrant dans le coeur thermiquement isolant (168) de l'élément de paroi (13) pour la formation des cordons de soudure intérieurs (205), auxquelles se raccordent respectivement des nervures d'appui (204) orientées vers l'intérieur et s'étendant transversalement au plan des panneaux de tôle (158), et **en ce que** la zone de liaison (203) entre le panneau de tôle respectif (158) et la nervure d'appui respective (204) est réalisée en forme d'arc ou de ligne droite s'étendant en oblique, de telle manière qu'un creux soit formé entre les panneaux de tôle (158) placés bout à bout l'un par rapport à l'autre et la tôle de sol (157), et **en ce que** les cordons de soudure respectifs (205) sont prévus dans ces creux.

10. Chambre de test climatisée selon l'une quelconque des revendications 1 à 9, **caractérisée en ce que** les panneaux de tôle intérieurs inférieurs (164) des éléments de plafond (8) forment dans leurs régions de bord vers l'élément de paroi respectivement voisin (14) des zones de liaison pliées vers le bas (197), auxquelles se raccordent des nervures d'appui (197) orientées vers l'extérieur, s'étendant horizontalement parallèlement au plan de l'élément de plafond (8), et **en ce que** les régions de bord des panneaux de tôle intérieurs (165) des éléments de paroi (14) voisines des éléments de plafond (8) forment des zones de liaison de forme pliée (200) pénétrant dans le coeur thermiquement isolant (169) de l'élément de paroi (14) pour la formation des cordons de soudure intérieurs (202), auxquelles se raccordent respectivement des nervures d'appui (201) orientées vers l'intérieur, s'étendant transversalement au plan des panneaux de tôle (165), et **en ce que** la zone de liaison (200) entre le panneau de tôle respectif (165) et la nervure d'appui respective (201) est réalisée en forme d'arc ou de ligne droite s'étendant en oblique, de telle manière qu'un creux soit formé entre les panneaux de tôle (165) placés bout à bout l'un par rapport à l'autre et les panneaux de tôle (164), et **en ce que** les cordons de soudure respectifs (202) sont prévus dans ces creux.

11. Chambre de test climatisée selon l'une quelconque des revendications 1 à 10, **caractérisée en ce que** le coeur isolant (168, 169) présente dans la région des cordons de soudure (202, 205) des zones (190, 191, 192, 193, 194), qui se composent de matériaux à haute résistance thermique.

12. Chambre de test climatisée selon l'une quelconque des revendications 1 à 11, **caractérisée en ce que** les panneaux de tôle (158, 165) sont dotés, vers le coeur thermiquement isolant (168, 169), d'un revêtement à haute résistance thermique et/ou sont garnis de plaques isolantes (207, 208, 209).

13. Chambre de test climatisée selon l'une quelconque des revendications 1 à 12, **caractérisée en ce que** les éléments de paroi (23, 24, 25, 26) sont réalisés dans les régions des coins de la chambre de test climatisée (1) sous la forme d'éléments d'angle, qui forment respectivement vers l'élément de paroi voisin (13, 14, 15, 16, 18, 19, 21, 22) une partie de paroi saillante (65, 66, 74, 75, 76, 77).
